# EUROPÄISCHE PATENTSCHRIFT

(11) **EP 3 849 375 B1**
(45) Veröffentlichungstag und Bekanntmachung des Hinweises auf die Patenterteilung: **28.02.2024**
(21) Anmeldenummer: 19779760.8
(22) Anmeldetag: 15.09.2019
(51) Int. Cl.: A45D 34/00, A45D 40/00, A45D 40/18, A61J 7/00, B65D 41/04

(54) **BEHÄLTER FÜR KOSMETIKA UND ANDERE PRODUKTE MIT BEGRENZTER VERWENDUNGSZEIT, ODER FÜR DIE ZEITGESTEUERTE PRÄSENTATION VON PRODUKTEN, MIT INTEGRIERTER UHR, ELEKTRONIK UND TIMERFUNKTION**
CONTAINER FOR COSMETICS AND OTHER PRODUCTS WITH A LIMITED PERIOD OF USE, OR FOR THE TIME-CONTROLLED PRESENTATION OF PRODUCTS, WITH INTEGRATED CLOCK, ELECTRONICS SYSTEM AND TIMER FUNCTION
RÉCIPIENT POUR COSMÉTIQUES ET AUTRES PRODUITS À PÉRIODE D'UTILISATION LIMITÉE, OU POUR LA PRÉSENTATION TEMPORISÉE DE PRODUITS, À MONTRE, ÉLECTRONIQUE ET FONCTION DE MINUTEUR INTÉGRÉES

(30) Priorität: 16.09.2018 CH 10992018; 10.06.2019 CH 7822019
(43) Veröffentlichungstag der Anmeldung: 21.07.2021
(73) Patentinhaber: Yves Swiss AG, 6210 Sursee (CH)
(72) Erfinder: NIEDERMANN, Claude, 6208 Oberkirch (CH)
(74) Vertreter: Felber, Josef
(86) Internationale Anmeldenummer: PCT/EP2019/074599
(87) Internationale Veröffentlichungsnummer: WO 2020/053440

(56) Entgegenhaltungen:
- US-A- 4 419 016
- US-A- 5 746 348
- US-A1- 2009 259 336
- US-A1- 2018 018 482

## Beschreibung

Behälter für Kosmetika, zum Beispiel in Form von Kosmetikdosen, enthalten Haut-Crèmen, Schutz- und Schminkcrämen, Gels, Seren oder Puder (Powder), also Beauty-Produkte, die einer Alterung ausgesetzt sind und daher meist ein empfohlenes Ablaufdatum aufweisen, über welches hinaus diese Produkte aus gesundheitlichen Gründen nicht mehr verwendet werden sollten. Bei einigen Produkten beginnt die Haltbarkeitsperiode mit dem ersten Öffnen des Behälters zu laufen, bei anderen druckt der Hersteller ein fixes Haltbarkeitsdatum auf die Verpackung. Üblicherweise öffnet der Beauty-Produkt-Anwender die Verpackung, ohne das Datum der ersten Öffnung zu notieren. Sämtliche Beauty-Produkte haben jedoch eine begrenzte Verwendungszeit, die ab der ersten Öffnung zu laufen beginnt, wenn nicht auf dem Produkt ein definitives Ablaufdatum angegeben wird. Wenn ein bestimmtes Produkt auf zum Beispiel das Gesicht aufgetragen wird, oder zweimal nacheinander aufgetragen werden soll, so erfordert dieses Produkt eine bestimmte Einwirkzeit. Man muss dann warten, bis diese verstrichen ist, bevor ein weiteres Produkt, sei es eine Schminke, Tusche oder ein Puder aufgetragen wird.

Herkömmlich werden Kosmetikprodukte aufwändig verpackt, das heisst in teuren Dosen aus Glas, Aluminium oder Kunststoff, und meist sind diese Dosen mit einem Schraubdeckel, Schnappdeckel oder Kippdeckel verschliessbar. Die Masse der Dose stehen dabei oft in einem unangemessenen Verhältnis zum Inhalt. Für wenige Gramm einer Salbe wird eine Dose mit einem Vielfachen dieses Gewichtes oder des Salbenvolumens distribuiert. Und wenn der Inhalt der Dose aufgebraucht ist, landet sie im Haushaltmüll. Dieser Sachverhalt ist ökologisch und auch ökonomisch zu beanstanden. Ausserdem weiss man bei einer herkömmlichen angebrauchten Dose nicht, wie alt nun der Inhalt ist und ob er ohne Bedenken noch angewendet werden kann. Es gibt weitere Waren oder Produkte, die eine begrenzte Verwendungsdauer aufweisen, etwa Medikamente wie Tabletten und Ampullen oder ein Serum, und auch Esswaren aller Art. Schliesslich gibt es Produkte, die als Geschenk zu einem ganz bestimmten wählbaren Zeitpunkt präsentiert werden sollten, etwa Schmuck, Juwelen und sonstige Kleinode aller Art.

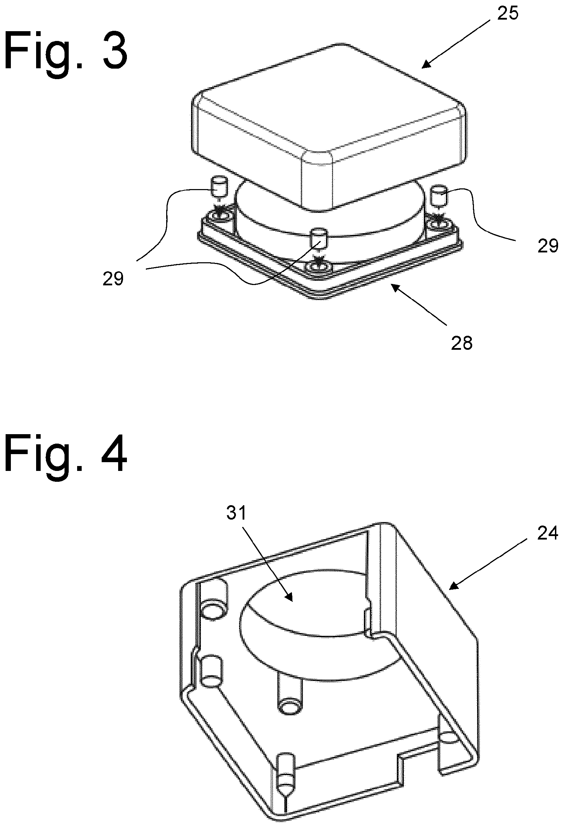

Im Stand der Technik offenbart US 201 8/01 8482 A1 (JAMMET JEAN-CLAUDE) 18. Januar 2018 einen Behälter (10) für Kosmetika (siehe Abs. 54) und andere Produkte mit begrenzter Verwendungszeit (siehe Abs. 54) oder für die zeitgesteuerte Präsentation von Produkten, in welchem eine mechanische, aufziehbare Uhr oder eine elektronische Uhr (siehe Abs. 148) mit Akku oder Batterie (siehe Abs. 129) und zugehörigem Display eingebaut ist (siehe Abs. 210-211), in beiden Fällen mit Stoppuhr- und Wecker-Funktion zur Anzeige der Lebensdauer des enthaltenen Produktes (siehe Abs. 153, 155, 211) oder zur zeitgerechten Präsentation des eingelegten Produktes. US 4 419 016 A (ZOLTAN BART J) 6. Dezember 1983 zeigt einen ähnlichen Behälter 2 mit Uhr 8 und Display 10, 12, 14, wie in Spalte 4, Zeilen 34-50 und Spalte 5, Zeile n1-26 beschrieben. Ebenfalls zeigt US 5 746 348 A (BLOOM ROBERT) 5. Mai 1998 einen solchen Behälter 10 mit Uhr 60 und Display 20, gemäss den Abbildungen und Spalte 1, Zeilen 37 bis Spalte 5, Zeile 18, und auch US 2009/259336 A1 (RATNAKAR NITESH) 15. Oktober 2009, mit Behälter 10 mit Display 25, in Absatz 36. Desweiteren ist aus US 201 8/01 8482 bekannt, dass ein solcher Behälter eine elektronische Schaltung mit Zeitelement als elektronische Uhr auf einer elektronischen PCBA-Platine einschliessen kann, mit einem zugehörigen Display zur optischen Anzeige mindestens der Restlaufzeit der Lebensdauer des im Innern des Behälter enthaltenen Produktes, sowie wahlweise zur optischen Anzeige von Text und Bildern bzw. Filmen, oder zusätzlich mit einem Lautsprecher zum Auslösen und Abspielen einer akustischen und/oder visuellen Produktpräsentation auf dem Display ab einem Speichermedium. Das ist in Figur 3 und Abschnitt 211 offenbart. In den Abschnitten 164 bis 166 zur Figur 3 ist ausserdem gezeigt und beschrieben, dass der Behälter einen Aufnahmezylinder aufweisen kann, zum Einsetzen einer mit einer Siegelfolie verschliessbaren Kapsel mit dem Produkt als Inhalt, und dass dieser Aufnahmezylinder in seiner Innenwand Nuten unterschiedlicher Grösse oder unterschiedlicher Profile aufweist, sodass die einzusetzende, austauschbare Kapsel je nach Drehlage mit ihren Rippen oder Rillen an ihrer Aussenwand in nur einer einzigen Drehlage in den Aufnahmezylinder einsetzbar ist.

Vor diesem Hintergrund ist es die Aufgabe der vorliegenden Erfindung einen solchen Behälter für Kosmetika und andere Produkte mit begrenzter Verwendungszeit oder für die zeitgesteuerte Präsentation von Produkten, zu schaffen, mit einem Timer in Form einer elektronischen Schaltung, der besonders einfach auslösbar ist. Ausserdem ist es eine Aufgabe, dass die elektronische Schaltung verschiedene Timer-Funktionen bietet, netzunabhängig betreibbar ist und eine Erstöffnungsgarantie bietet, das Produktalter angibt und das Überschreiten des maximalen Produktalters anzeigt. Der Behälter mit diesen Funktionen soll auch in verschiedene Produkte kombinierbar sein und soll direkt, sicher und bequem die Kontrolle der Haltbarkeit bzw. Verwendungszeit wie je nach dem auch die Kontrolle der Einwirkzeit oder Wirkdauer ermöglichen. In einer speziellen Ausführung des Behälters soll damit ein System realisierbar sein, um die Distribuierung von solchen Produkten in Nachfüll-Kapseln zu ermöglichen und trotzdem eine hygienische und einfach praktikable Handhabung der Produkte für die sie anwendenden Personen zu schaffen, nicht zuletzt mit dem Ziel, den anfallenden Abfall im Zusammenhang mit solchen Produkten zu reduzieren. Desweiteren soll dieser Behälter in einer weiteren Ausführung dafür geeignet sein, Produkte wie zum Beispiel Schmuck, Juwelen und sonstige Kleinode aller Art zeitgesteuert präsentieren zu können, um beim Schenken derselben einen ungeahnten Überraschungseffekt auszulösen.

Diese Aufgabe wird gelöst von Behälter für Kosmetika und andere Produkte mit begrenzter Verwendungszeit oder für die zeitgesteuerte Präsentation von Produkten, in welchem eine mechanische, aufziehbare Uhr oder eine elektronische Uhr mit Akku oder Batterie und zugehörigem Display eingebaut ist, in beiden Fällen mit Stoppuhr-und Wecker-Funktion zur Anzeige der Lebensdauer des enthaltenen Produktes oder zur zeitgerechten Präsentation des eingelegten Produktes, wobei der Behälter einen Aufnahmezylinder (30) aufweist, zum Einsetzen einer mit einer Siegelfolie verschliessbaren Kapsel mit dem Produkt als Inhalt, wobei der Aufnahmezylinder in seiner Innenwand Nuten unterschiedlicher Grösse oder unterschiedlicher Profile aufweist, und die einzusetzende, austauschbare Kapsel je nach Drehlage dazu passende Rippen oder Rillen an ihrer Aussenwand aufweist, sodass die Kapsel in nur einer einzigen Drehlage in den Aufnahmezylinder einsetzbar ist und damit die Art der Kapsel erkennt und weiter, dass der Behälter ein Bodenteil, ein Gehäuse mit Ausnehmung zum Einsetzen der Kapsel in den Aufnahmezylinder sowie einen Deckel einschliesst, wobei der Bodenteil die elektronische Uhr sowie den Akku oder die Batterie enthält, und den Display, und der Bodenteil eine Aufsetzplatte enthält, die auf Einsatzstiften ruht, und auf welche ein druckfederbelasteter, unten aus dem Boden des Bodenteils ragender Stift gerichtet ist, der durch Auslösen der Druckfeder an der Platine anschlägt und dort elektrische Kontakte schliesst, zum Auslösen der Timerfunktion der elektronische Schaltung. Besonders vorteilhafte Ausgestaltungen werden mit den Merkmalen der abhängigen Patentansprüche erzielt.

In den Figuren werden mögliche Ausführungen dieses Behälters für Kosmetika oder auch andere Produkte mit begrenzter Verwendungszeit und auch zum zeitgerechten Präsentieren von Produkten dargestellt, und nachfolgend wird die Funktion dieser Behälter beschrieben.

Es zeigt:
- Figur 1:: Einen kubusförmigen Behälter als Dose für Kosmetika;
- Figur 2:: Diesen kubusförmigen Behälter für Kosmetika in einer Explosionszeichnung mit Bodenteil, Gehäuse und Deckel;
- Figur 3:: Den Deckel des Behälters mit seinem inneren Einsatz;
- Figur 4:: Das Gehäuse des Behälters in einer Ansicht von schräg unten;
- Figur 5: Eine detaillierte Explosionszeichnung des Behälters;
- Figur 6:: Eine perspektivische Ansicht des kubusförmigen Behälters von schräg unten gesehen;
- Figur 7:: Eine perspektivische Ansicht des kubusförmigen Behälters von schräg oben und hinten gesehen;
- Figur 8:: Eine perspektivische Ansicht des Gehäuses von unten mit der einzusetzenden elektronischen Platine und dem Akku;
- Figur 9:: Den Display zum Einbau in den Behälter;
- Figur 10:: Einen Blick auf den Bodenteil des Behälters, mit Auflageplatte für die einzusetzende Kapsel;
- Figur 11:: Die Einzelteile zum Einsetzen in den Bodenteil des Behälters, mit daneben vergrössert dargestellter Druckfeder mit Starter-Stift zum Auslösen der Timerfunktion der Uhr;
- Figur 12:: Einen Schnitt durch den Bodenteil mit Auflageplatte und Druckfeder im Anfangszustand, vor dem Betätigen des Starter-Stiftes;
- Figur 13:: Einen Schnitt durch den Bodenteil mit Auflageplatte und Druckfeder im Zustand, nachdem der Starter-Stift den Timer startete;
- Figur 14:: Einen Blick auf die Unterseite des Behälters mit dem Starter-Stift und einem Rückhalteplättchen zum Einschalten des Timers durch Wegziehen des Plättchens und Freigeben des Starter-Stifts;
- Figur 15:: Einen runden Behälter mit eingesetzter Kapsel und strichliniert angedeuteter Aussparung zum Einsetzen eines gebogenen Displays mit elektronischer Platine und Akku;
- Figur 16:: Einen bogenförmig geformten Display mit darin verborgener elektronischer Platine und Akku;
- Figur 17:: Einen runden Behälter mit strichliniert angedeutetem eingesetzten Display mit elektronischer Platine und Akku darin;
- Figur 18:: Eine Kapsel mit Kosmetika darin, und darunter dargestellt einen Aufnahmezylinder, in welchen diese Kapsel in nur einer einzigen Drehlage einsetzbar ist;
- Figur 19:: Die Kapsel für die Aufnahme von Kosmetika, und darunter dargestellt den zugehörigen Aufnahmezylinder, in welchen diese Kapsel in nur einer einzigen Drehlage einsetzbar ist, in einer Darstellung von oben gesehen;
- Figur 20:: Einen Aufnahmezylinder für einen Behälter für Kosmetika mit darüber einer in ihrer Drehlage zum Einsetzen ausgerichteten Kapsel;
- Figur 21:: Einen Behälter für Kosmetika mit in seinem Innern strichliniert angedeutetem Aufnahmezylinder für die Aufnahme einer Kapsel in einer bestimmten Drehlage;
- Figur 22:: Eine digitale elektronische Uhr, geeignet zum Verbauen mit einer Kosmetik-Dose als Behälter;
- Figur 23:: Eine Dose für die Aufbewahrung von Tabletten oder Pillen, von denen an jedem Wochentag eine einzelne entnommen werden soll;
- Figur 24:: Eine Kosmetik-Dose als Behälter mit einer Uhr mit Elektronik, die in ihrem Deckel integriert ist;
- Figur 25:: Eine Kosmetik-Dose als Behälter mit einer Uhr mit Elektronik, die in ihren Gewinde- oder Aufsatzdeckel integriert ist;
- Figur 26:: Eine Kosmetik-Flasche als Behälter mit einer Uhr mit Elektronik, die um ihren Umfang angelegt und festgemacht oder integriert ist;
- Figur 27:: Eine Kosmetik-Flasche als Behälter mit einer Uhr und Elektronik, die auf ihrem Flaschenverschluss sitzt und mit ihm verbunden ist;
- Figur 28:: Eine Kosmetik-Tube als Behälter mit einer Uhr und Elektronik an der Tube befestigt;
- Figur 29:: Einen Kosmetik-Beutel als Behälter mit einer Uhr und Elektronik am Beutel befestigt;
- Figur 30:: Eine Kosmetik-Dose als Behälter mit einer Uhr und Elektronik mit Display in die Dosenwand integriert;
- Figur 31:: Eine Kosmetik-Dose als Behälter mit elektronischer Uhr, Display und wieder aufladbarem Akku, mit einer zugehörigen Docking- oder Ladestation.

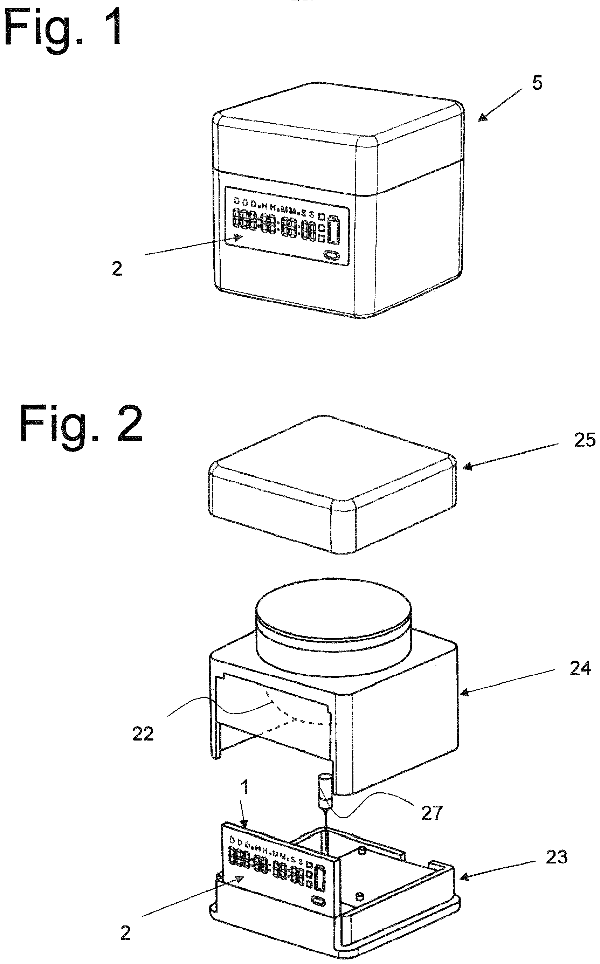

In Figur 1 ist ein Behälter in Form einer Kosmetikdose 5 gezeigt, in welchem eine Kapsel mit Kosmetika darin untergebracht ist, vorzugsweise eine Einwegkapsel. Man spricht auch von einem *jar* bzw. *inner jar.* Diese Kapsel ist gefüllt mit einer Salbe, Crème, Paste, Gel oder Puder. Dieser Kosmetikbehälter 5 ist hier kubusförmig ausgeführt, beispielsweise in einer handlichen Grösse mit ca. 65 mm Kantenlänge, kann aber auch in beliebigen anderen Formen und Grössen ausgeführt sein. Weiter ist klar, dass ein solcher Behälter auch für andere Produkte mit begrenzter Verwendungszeit gestaltet werden kann, etwa für die Aufbewahrung von Medikamenten, Tabletten, Pillen, Kapseln, Ampullen sowie auch von Esswaren aller Art. Als Besonderheit weist der Behälter hier sichtbar einen LCD auf, das heisst einen Liquid Crystal Display 2 zur Anzeige von allerlei Daten, wie das später noch im Einzelnen beschrieben und erklärt wird.

In Figur 2 ist dieser kubusförmige Behälter 5 für Kosmetika in einer Explosionszeichnung mit Bodenteil 23, Gehäuse 24 und Deckel 25 gezeigt. Im Gehäuse 24 sieht man hier die Kapsel 22 eingesetzt, welche die Salbe, Crème, Paste, den Gel oder das Puder enthält. Im Bodenteil 23 befindet sich eine elektronische PCBA-Platine (Printed Circuit Board Assembled) mit einer elektronischen Schaltung sowie einem Zeitelement und einem angeschlossenen wieder aufladbaren Akku oder einer Batterie, sodass eine elektronische Uhr 1 geschaffen ist, die als Timer und Stoppuhr funktionieren kann, aber auch das aktuelle Kalenderjahr, das Datum und die Uhrzeit anzeigen kann, sowie wahlweise andere Daten, zum Beispiel Text und Bilder. Weiter erkennt man hier einen Hall-Sensor 27 zum Starten der Timer-Funktion infolge der Veränderung eines Magnetfeldes, wenn eine gefüllte Kapsel in das Gehäuse 24 eingesetzt wird.

Die Figur 3 zeigt den Deckel 25 des Behälters mit seinem inneren Einsatz 28. Vier rundum angeordnete Permanent-Magnete 29 sind in spezielle Einsatzlöcher im Einsatz einsetzbar und diese wirken zusammen mit ebensolchen Permanentmagneten im Innern des Deckels 25, sodass dieser innere Einsatz leicht und werkzeuglos mit dem Deckel 25 verbindbar und wieder von ihm trennbar ist.

Die Figur 4 zeigt das Gehäuse 24 in einer Ansicht von schräg unten, mit einer Ausnehmung 31, durch die von oben eine Kapsel mit einer Salbe, Crème, Paste, einem Gel oder einem Puder darin eingesetzt werden kann.

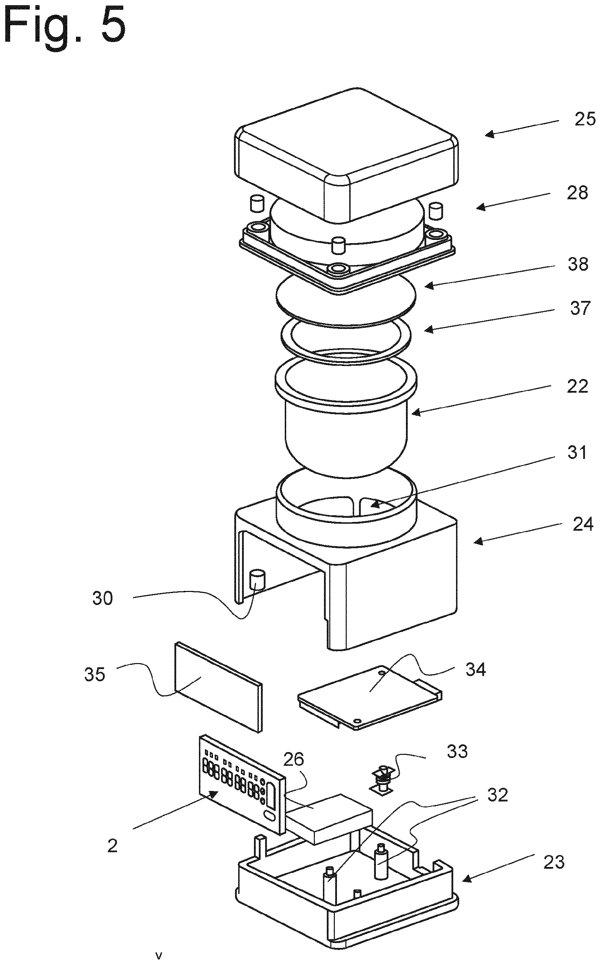

Die Figur 5 zeigt eine detaillierte Explosionszeichnung des ganzen Behälters, von unten beginnend mit dem Bodenteil 23, mit darin der elektronischen PCBA-Platine 26, mit Führungsstiften 32 für die darüber gezeigte Platte 34, die über diese Führungsstifte 32 gestülpt und in das Bodenteil 23 eingesetzt wird. Weiter erkennt man den LC Display 2, welcher mit einer transparenten Fensterplatte 35 abdeckbar ist, vorzugsweise aus Acrylglas (PolyMethylenMethAcrylat PMMA) sowie eine Druckfeder 33, deren Funktion später noch erklärt wird.

Weiter oben in der Zeichnung sieht man das Gehäuse 24 mit seiner Ausnehmung 31 für die von oben einzusetzende Kapsel 22, sowie auf der Innenseite am unteren Rand auch einen von vier Permanentmagneten 30 zum Aufsetzen und Halten des Gehäuses 24 auf dem Bodenteil 23, wo ebensolche Permanentmagnete angeordnet sind. Weiter oben, oberhalb des Gehäuses 24, ist die Kapsel 22 gezeigt. Es handelt sich hier um eine Einwegkapsel aus Kunststoff, aus Aluminium oder aus einem biologisch abbaubaren Material, die oben einen Dichtring 37 trägt. Die Kapsel 22 sowie die zugehörige Siegelfolie 38 können bedarfsweise auch sauerstoffdicht ausgeführt sein, zum Beispiel mit Einbau einer Aluminiumschicht in die Kapsel wie auch in die Siegelfolie. Ganz oben sieht man den Deckel 25 mit seinem inneren Einsatz 28, wie schon zu Figur 3 beschrieben.

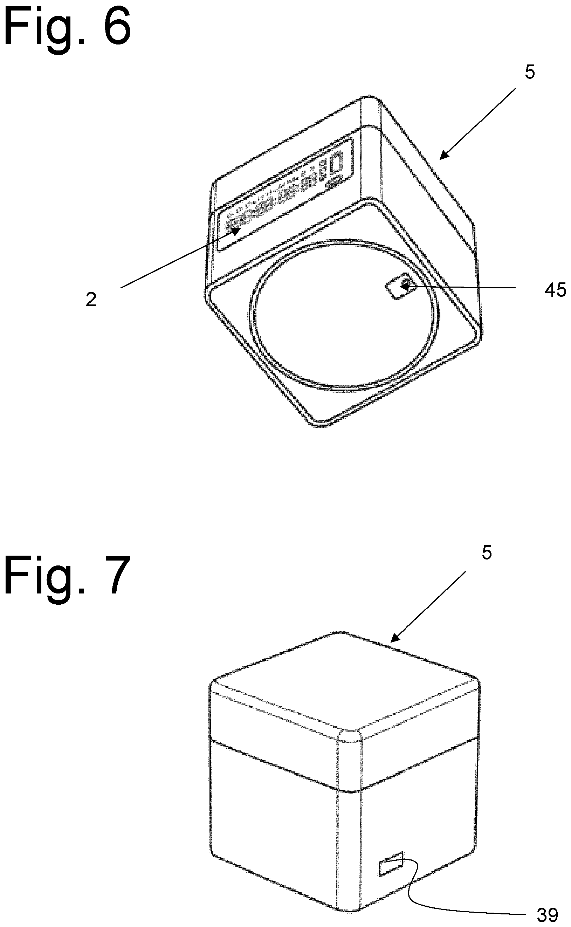

In Figur 6 ist der zusammengesetzte Behälter für Kosmetika in einer perspektivischen Ansicht des kubusförmigen Behälters 5 von schräg unten gesehen dargestellt. Man erkennt auf seiner Vorderseite den LC Display 2 und unten eine mechanische Sicherung bzw. Einrichtung mit einem Plättchen 45 zum Auslösen der Timerfunktion, die mit dem erstmaligen Öffnen des Behälters betätigt wird, wie das später noch genauer erklärt wird. Die Figur 7 zeigt eine perspektivische Ansicht des kubusförmigen Behälters 5 von schräg oben und hinten gesehen. Eine USB-Schnittstelle 39 dient zum Aufladen des wieder aufladbaren Akkus im Innern des Bodenteils 23, welcher die elektronische PCBA-Platine mit Strom versorgt.

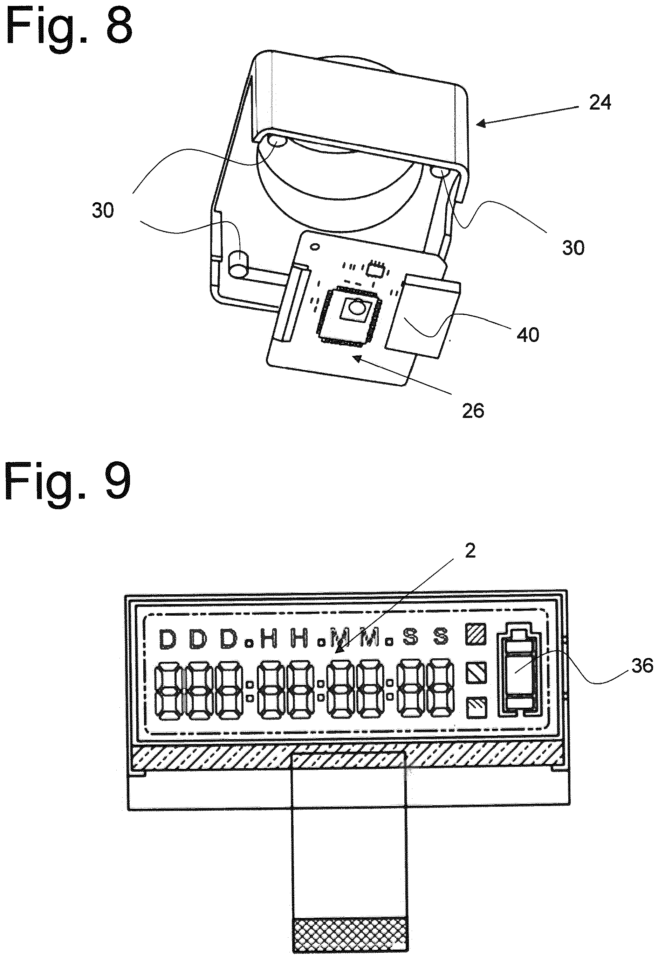

Die Figur 8 zeigt eine perspektivische Ansicht des Gehäuses 24 von unten mit der einzusetzenden elektronischen PCBA-Platine 26 und dem wieder aufladbaren Akku 40. Anstelle des Akkus kann eine Einweg-Batterie treten, die dann ab und zu ersetzt werden muss. Vier Permanentmagnete 30, wovon hier drei sichtbar, dienen zum Befestigen des Gehäuses 24 auf dem Bodenteil 23. Der integrierte Schaltkreis auf der PCBA-Platine 26 verarbeitet die Signale der Hallsonde 27 (Figur 2) und der vom Bediener vorgenommenen Eingaben und die Hallsonde 27 stellt fest, wenn ihr gegenüber ein Schliessmagnet am Deckels zu liegen kommt. Damit wird der Timer aktiviert. Die verarbeiteten Signale werden auf dem LC-Display (Liquid Crystal Display) 2 wie in Figur 9 dargestellt angezeigt. Von links wird die Anzahl abgelaufener Tage DDD nach Starten des Timers dreistellig angezeigt, also maximal 999 Tage, dann die Uhrzeit in Stunden HH, Minuten MM und Sekunden SS, und ganz rechts der Akku- oder Batterie-Ladezustand 36. Links von der Akku- bzw. Batterie-Ladezustand-Anzeige 36 können wahlweise weitere Anzeigen ermöglicht sein, etwa für "noch nicht geöffnet", "Produkt-Noch-Lebenszeit", "Produkt abgelaufen" etc.

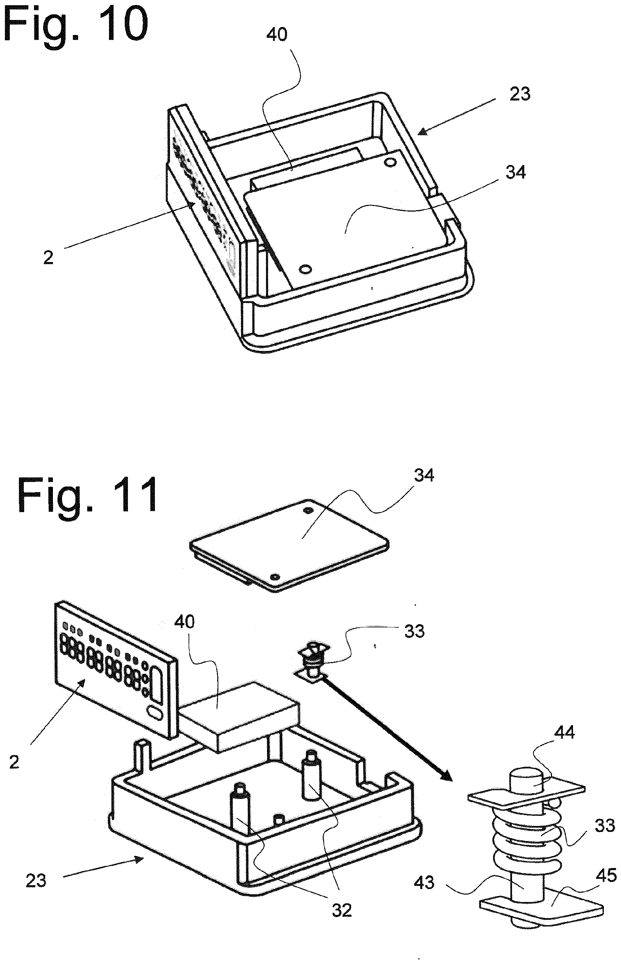

Die Figur 10 gibt einen Blick frei auf den Bodenteil 23 des kubusfömigen Behälters, mit Auflageplatte 34 für die einzusetzende Kapsel sowie darunter dem eingesetzten wieder aufladbaren Akku 40. Auf der Vorderseite des Bodenteils 23 ist der Display 2 angebracht.

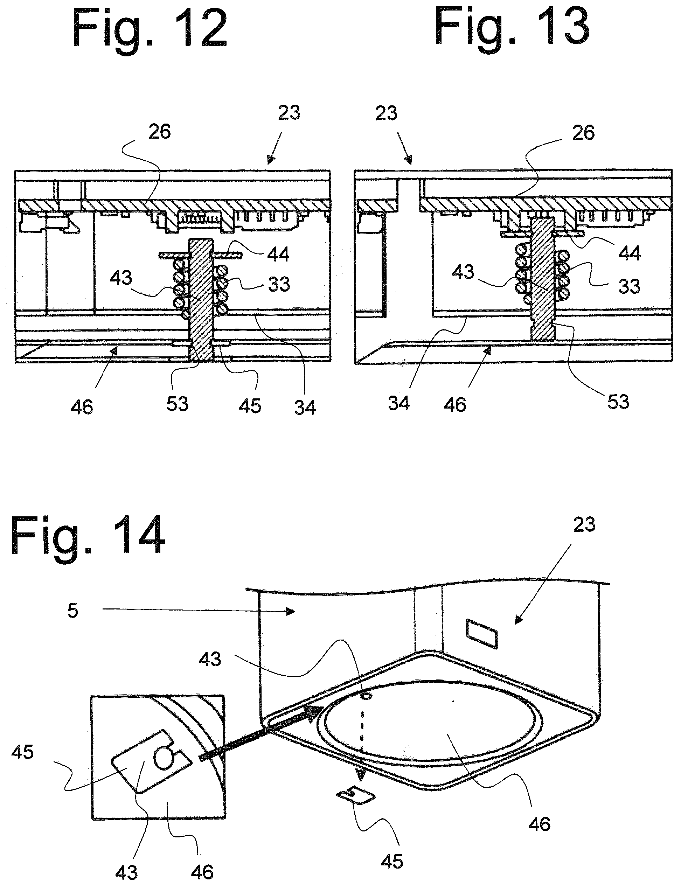

Die Figur 11 zeigt diesen Bodenteil 23 mit seinen Einzelteilen separat dargestellt, also mit dem LC Display 2, dem Akku 40, der Auflageplatte 34 und den Haltestiften 32 zum Aufsetzen der Auflageplatte 34. In den Bodenteil 23 wird auch eine Druckfeder 33 eingesetzt, die in dieser Darstellung rechts daneben vergrössert dargestellt ist. In der Druckfeder 33 verläuft axial ein Stift 43, der oben ein Kontaktplättchen 44 trägt und unten von einem Halteplättchen 45 gegen die Kraft der Druckfeder 33 in einer bestimmten Axiallage festgehalten werden kann. Aus den Figuren 12 und 13 erschliesst sich die Funktion dieses Stiftes 43. Wie in Figur 12 gezeigt, in einem Schnitt durch den Bodenteil 23 mit Auflageplatte 34, ragt der Stift 43 unten aus dem Boden 46 des Bodenteils 23 und dort sitzt ein Halte-Plättchen 45, welches in eine umlaufende Nut 53 im Stift 43 eingreift und ihn in dieser Lage festhält. Wird das Halte-Plättchen 45 vom Stift 43 weggezogen, so gibt es ihn frei und die Druckfeder 33 schiebt den Stift 43 mitsamt dem oberen Kontaktplättchen 44 nach oben, wonach das Kontaktplättchen 44 an die elektronische PCBA-Platine 26 anschlägt und daran elektrische Kontakte schliesst, sodass deren Timerfunktion aktiviert wird. Es ist klar, dass diese Auslösung der Timerfunktion auch elektronisch und berührungslos, zum Beispiel mittels Magneten realisiert werden kann. Ab jetzt, das heisst ab Start der Timerfunktion, misst die elektronische Schaltung die laufende Zeitperiode des Verbleibens der Kapsel im Behälter 1 und die Rest-Lebensdauer des Inhalts wird errechnet und am Display 2 angezeigt. Die Platine kann auch ein akustisches Element (Beeper) oder einen Lautsprecher enthalten, sodass nebst der optischen Anzeige auch ein akustisches Signal oder eine Audiobotschaft abspielbar ist, wenn die Rest-Lebensdauer eines Produktes abgelaufen ist.

Die Figur 14 zeigt einen Blick auf die Unterseite des Behälters 5 bzw. seines Bodenteils 23 mit dem Stift 43 und dem Rückhalteplättchen 45 zum Einschalten des Timers durch Zurückschieben des Plättchens 45 und damit Freigeben des Stifts 43, der danach zur PCBA-Platine hin verschoben wird. Der Ausschnitt mit dem Stift 43 und dem Rückhalteplättchen 45 auf dem Boden 46 des Bodenteils 23 ist links neben der Figur noch vergrössert dargestellt.

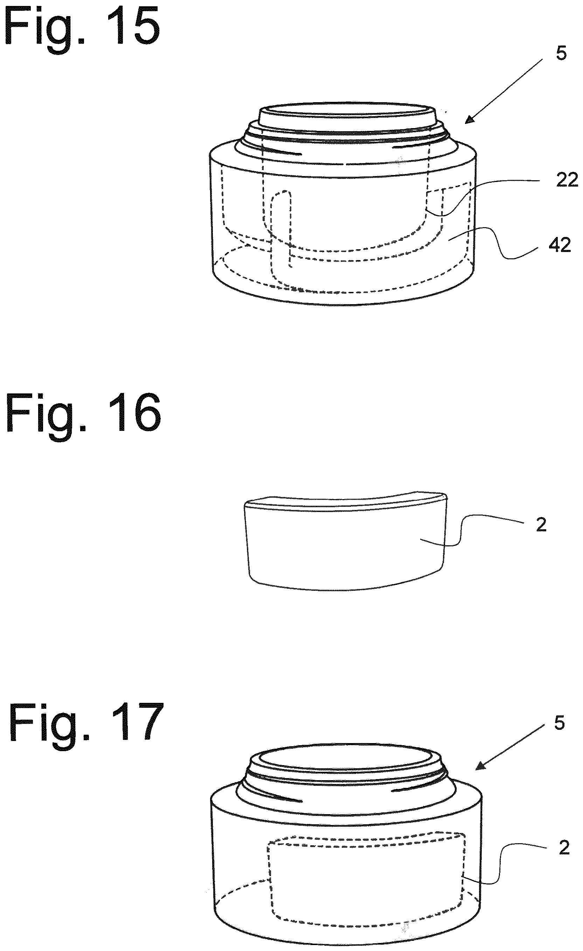

In Figur 15 ist die Variante eines runden Behälter 5, zum Beispiel einer Glas- oder Acryl-Dose, mit eingesetzter Kapsel 22 und strichliniert angedeuteter Aussparung 42 zum Einsetzen eines gebogenen Displays mit elektronischer Platine und Akku von unten dargestellt. Die Figur 16 zeigt den dazu passenden bogenförmig geformten Display 2 mit darin verborgener elektronischer PCBA-Platine und Akku und die Figur 17 zeigt diesen runden Behälter 5 mit strichliniert angedeutetem, eingesetzten Display 2 mit elektronischer PCBA-Platine und Akku darin. In diesen Behälter 5 wird die oben mit einer Siegelfolie verschlossene Kapsel 22 mit einer Crème, Salbe, Paste, einem Gel oder mit einem Puder eingesetzt und dann reisst man die Siegelfolie von der Kapsel 22 weg und verschliesst den Behälter 5 mit einem Gewindedeckel, wodurch die Timerfunktion durch Schliessen eines elektrischen Kontaktes durch das ganz nach unten Drücken und Einschnappen oder Einrasten der Kapsel gestartet wird.

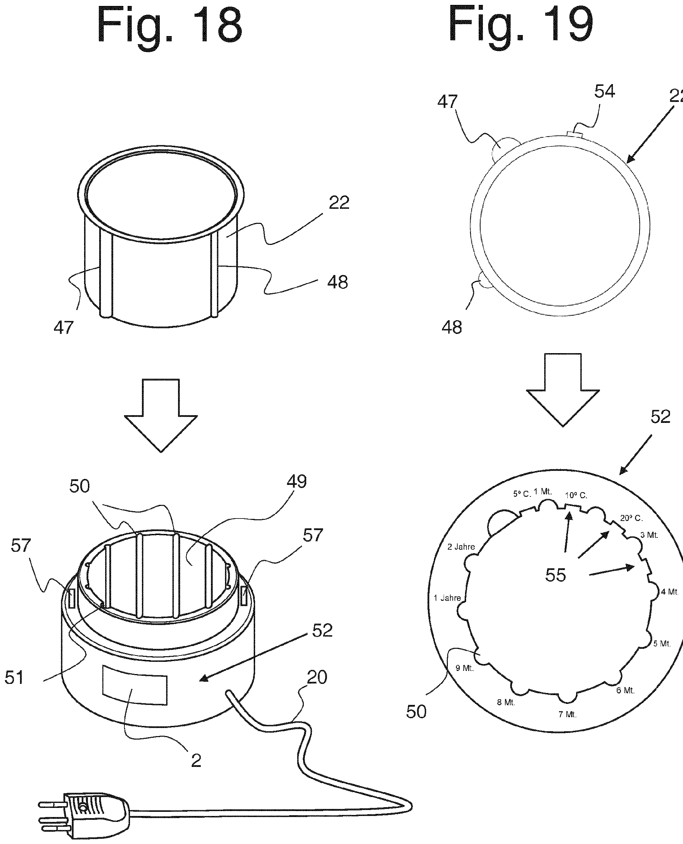

Die Figur 18 zeigt eine besondere Kapsel 22 zum Einsatz in einen darunter dargestellten Aufnahmezylinder 52 im Innern des Behälters 5. Diese hier im Prinzip rotationssymmetrische Kapsel 22 weist an ihrer äusserem Umfangswand mindestens zwei axial verlaufende Rippen oder Wulste 48, 47 auf. Eine dieser Rippen oder Wulste 47 ist dabei dicker ausgeführt und somit passt die Kapsel 22 nur in einer ganz bestimmten Drehlage in den Aufnahmezylinder 52. Hierzu weist dieser Aufnahmezylinder 52 in seiner inneren Wandung 49 axial verlaufende Nuten 50, 51 auf, in welche die Rippen oder Wulste 48, 47 an der Kapsel 22 einpassen. Die dickere Rippe oder der dickere Wulst 47 an der Kapsel 22 hingegen passt einzig in die grössere Aufnahmenut 51 und somit lässt sich die Kapsel 22 nur in einer ganz bestimmten Drehlage einsetzen. Anstelle von Rippen und Nuten unterschiedlicher Grösse können die Rippen und Nuten auch unterschiedliche Profile aufweisen. Elektrische Kontakte unten im Aufnahmezylinder 52 werden durch das gänzliche, einschnappende Einstecken der Kapsel 22 geschlossen, sodass ein Stromkreis schliesst und die elektronische Schaltung feststellen kann, ob und wenn ja welcher Art Kapsel 22 in den Aufnahmezylinder 52 im Behälter 1 eingesteckt wurde. Entsprechend dem Produkt kann die integrierte Schaltung im Behälter die Restlaufzeit des Produktes in der eingesetzten Kapsel 22 errechnen und am Display anzeigen. In einer anderen Ausführung kann der Start des Anzählens der Restlaufzeit des Produktes generell durch das Einsetzen der Kapsel ausgelöst werden. Es können auch mechanische Kontakte oder Verschlusselemente 57 am Rand der Aufnahmezylinders 57 angebracht sein, und der Aufnahmezylinder 57 kann mit einem Display 2 und einem elektrischen Anschluss 20 ausgerüstet sein.

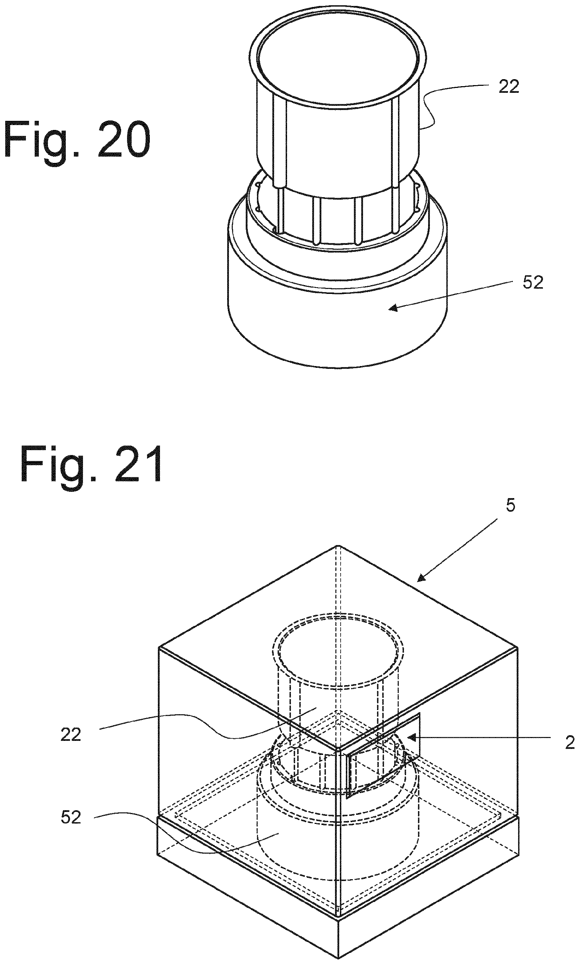

Die Figur 19 rechts daneben zeigt die Kapsel 22 und darunter den Aufnahmezylinder 52 von oben gesehen. Der dicke Wulst 47, wenn man sich den Umfang der Kapsel 22 als Zifferblatt einer Uhr vorstellt, liegt hier auf ca. 11:00 Uhr am äusseren Rand der Kapsel 22 und er passt nur in der entsprechenden Drehlage in den darunter dargestellten Aufnahmezylinder 52. Der dünnere Wulst 48 an der Kapsel 22 liegt hier an der Stelle, wo auf dem Zifferblatt 08:00 Uhr stünde. Wird die Kapsel 22 in der entsprechenden Drehlage in den Aufnahmezylinder 52 eingesetzt, so kommt der dünnere Wulst 48 in jene Nut 50 zu liegen, welche dann eine Laufzeit oder Verbrauchsperiode von 9 Monaten abzählen würde, durch Ablaufen der Zeit von 9 Monaten bis zu Null, wobei am Display laufend die Restlaufzeit angezeigt wird. Es gibt in der gezeigten Ausführung der Kapsel 22 noch eine eckige axial verlaufende Leiste 54 am äusseren Umfang der Kapsel 22, und in der Innenwand des Aufnahmezylinders 52 sind entsprechende axial verlaufende Nuten 55 mit eckigem Querschnitt ausgenommen. Wird die gezeigte Kapsel 22 mit ihrer eckigen Leiste 54 an der Stelle zwischen 12:00 und 01:00 in den Aufnahmezylinder 52 eingesetzt, wobei sie wie gesagt nur ein einer einzigen möglichen Drehlage einsetzbar ist, so wird die Leiste 54 in die Nut eingeschoben, welche mit 10°C markiert ist. Der Behälter kann nämlich einen Temperatursensor eingebaut haben, welcher die Temperatur der Kapsel laufend überwacht. Wird die Temperatur jemals über 10°C hinaus überschritten, so wird das erfasst und am Display angezeigt. Wenn also die Inhaltsstoffe bei max. 10°C gelagert werden sollen, so kann dieser Behälter in den Kühlschrank gestellt werden, in welchem eine Temperatur von meist ca. 7°C vorherrscht. Alternativ kann der Behälter auch mit einem Peltier-Element ausgerüstet sein, welches die nötige Kühlung gewährleistet. Dieser Behälter überwacht dann nicht bloss die Restlaufzeit, sondern auch noch die Lagertemperatur. Wenn die Kapsel 22 für eine Lagertemperatur von 20°C, also Zimmertemperatur geeignet ist, so wird eine entsprechende Kapsel eingesetzt, deren eine Rille dann in diese entsprechende Nut für die Lagerung bei 20°C einpasst und am Display zeigt es dann an: *Lagern bei Zimmertemperatur.* Wenn die Lagerung oder die Applikation eines Wirkstoffes bei 30°C erfolgen soll, wird eine elektrische Heizung benötigt, die über den Netzanschluss mittels eines kleinen eingebauten Heizelementes im Behälterboden in der Kapsel 22 aufrechterhalten und geregelt werden kann. Die Figur 20 zeigt die Kapsel 22 in der einzigen Drehlage, in welcher sie in den darunterliegenden Aufnahmezylinder 52 einsetzbar ist.

Die Figur 21 zeigt diesen Behälter 5 für Kosmetika mit in seinem Innern strichliniert angedeutetem Aufnahmezylinder 52 für die ebenfalls strichliniert eingezeichnete eingesetzte Kapsel 22 und mit dem Display 2 an seiner Vorderseite zur Anzeige der jeweiligen Restlaufzeit des Produktes in der Kapsel 22. Weil die elektronische Schaltung anhand der Drehlage der Kapsel 22 erkennen kann, um welcher Art Produkt es sich handelt, können viele weitere Angaben zu diesem Produkt am Display 2 zur Anzeige gebracht werden, zum Beispiel Angaben zur Zusammensetzung des Kosmetik-Produktes, zu den enthaltenen Wirkstoffen, zur Handhabung und Anwendung des Produktes, etwa wie häufig und wo es aufzutragen ist etc. Im Grundsatz geht es mit dem vorgestellten Konzept um die Realisierung eines Refill-Systems, indem die effektiven Wirkstoffe durch Einsetzen von Nachfüll-Kapseln in den Behälter eingesetzt werden welche, dann alle die beschriebenen Zusatzfunktionen gewährleisten kann.

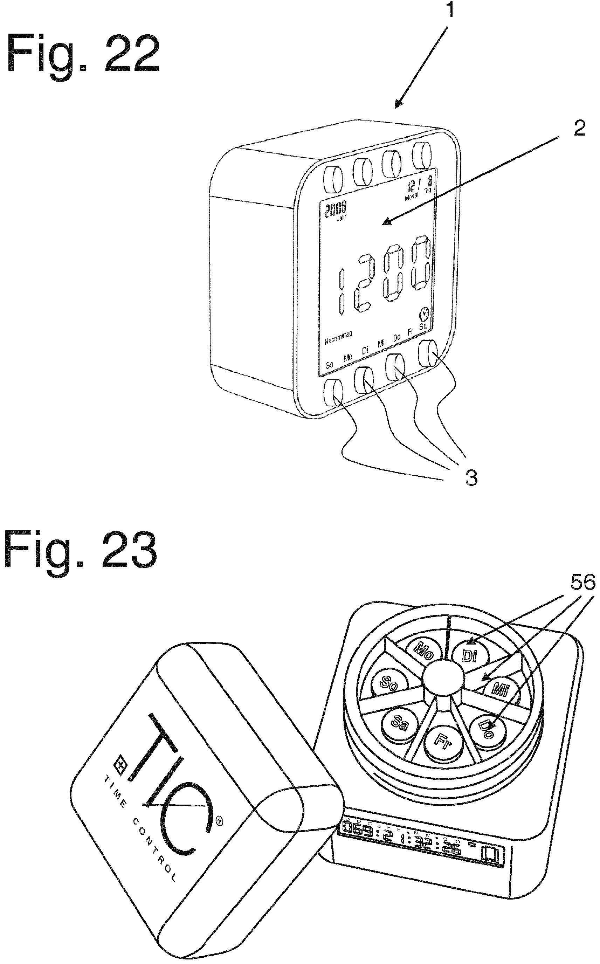

Im Folgenden werden weitere Ausführungen des Grundkonzepts eines Behälters 5 für Kosmetika mit einer Uhr mit Timerfunktion beschrieben. Die hier nachfolgend beschriebenen Funktionen lassen sich alle auch in der Schaltung und dem Display 2 für die Ausführungen der bisher in den Figuren 1 bis 21 beschriebenen Kosmetik-Behälter 5 integrieren. In Figur 22 ist eine elektronische Uhr 1 mit Akku und mit einem elektronischen Display 2 gezeigt. Diese Uhr 1 ist einerseits eine Uhr mit ewigem Kalender, das heisst sie zeigt nicht nur die Uhrzeit an, sondern auch das Kalenderjahr, den Monat und Wochentag. Ausserdem weist diese Uhr 1 eine Stoppuhr Funktion und eine Wecker- bzw. Timer-Funktion auf und verfügt über eine Eingabemöglichkeit für ein Datum sowie über ein Speichermedium zum Speichern desselben. Die Uhr 1 kann daher auch die Anzahl Tage / Stunden / Minuten / Sekunden bis zu einem abgespeicherten Datum anzeigen. Als Display kommt zum Beispiel ein *Color Super Twist Nematic-Display* bzw. CSTN-Display infrage. Dabei handelt es sich um sogenannte nematische Drehzellen, welche für die Anzeige auf einem LCD-Bildschirm sorgen. Im Fall des CSTN-Displays handelt es sich um eine Farbanzeige, die per Passivmatrix entsteht. Dies bedeutet, dass die einzelnen Bildpunkte bzw. die Flüssigkristalle des Bildschirms passiv angesteuert werden. In der Praxis sind CSTN-Displays zwar etwas schwächer hinsichtlich ihrer Wiedergabequalität, verbrauchen aber deutlich weniger Energie, wodurch der Akku geschont wird. Die geringere Wiedergabeleistung am langsameren Bildaufbau deutlich.

Anstelle eines CSTN-Displays kann wie schon erwähnt ein *Liquid Crystal Display* in Frage kommen, ein sogenannter "LCD" oder "LC-Display". In den meisten modernen elektronischen Geräten kommen LCD in einfacher und komplexer Form zum Einsatz. Bei dieser Form der Anzeige werden Bilder dadurch erzeugt, dass flüssige Kristalle durch eine elektrische Spannung Licht polarisieren und ausserdem kann die Uhr mit akustischen Elementen zur Abgabe von Alarmtönen versehen sein. Ein LCD ist in verschiedene Segmente aufgebaut, in welchen sich eine grosse Menge an Flüssigkristallen befindet. Durch die elektrische Spannung kann die Ausrichtung der Kristalle in den einzelnen Segmenten gesteuert werden. Hierdurch wird die Durchlässigkeit von polarisiertem Licht geregelt, welches durch eine Hintergrundbeleuchtung sowie Filter durch die Segmente geleitet wird. Bei LCDs, die beliebige Bilder anzeigen sollen, sind die einzelnen Segmente nach einem Raster geordnet. Man spricht dann von Pixeln bzw. Bildpunkten. Je höher die Anzahl dieser Bildpunkte ist, desto schärfer wird das Bild auf dem LCD.

Als weitere Alternative kann ein Display mit *organic light emitting diodes,* das heisst mit organischen Leuchtdioden zum Einsatz kommen. Im Gegensatz zu LCDs funktionieren OLED-Displays ohne Hintergrundbeleuchtung. Während ein LCD wie ein Filter für das im Hintergrund entwickelte Licht wirkt, strahlen OLEDs selbst farbiges Licht aus. Für die Erzeugung von Bildern benötigen diese Displays keine Kristalle. Der grosse Vorteil von OLED-Displays besteht darin, dass sie sehr dünn sind und auf nahezu jedes Material gesetzt werden können. Sie benötigen sehr wenig Energie, wodurch der Akku geschont wird. Mittels Tasten und/oder Drehknöpfen 3 lassen sich auf einem Menü, das am Display angezeigt wird, die verschiedenen Funktionen anwählen und benützen.

Diese erwähnten Displays erfordern gesonderte Tasten oder Drehknöpfe, um die Funktionen zu bedienen. Ohne solche Tasten oder Drehknöpfe kommt ein Touchscreen aus, also eine Anzeige, die es ermöglicht, die inliegende Elektronik mittels Berührungen des Displays zu steuern. Moderne Handys verzichten seit Jahren auf eine herkömmliche Tastatur. Stattdessen erfolgt die Texteingabe über das berührungsempfindliche Display. Man kann verschiedene Arten von Berührungsbildschirmen unterscheiden. In Handys kommen überwiegend kapazitive oder resistive Touchscreens zum Einsatz. Kapazitive Touchscreens können nur mit den Händen oder leitfähigen Stiften genutzt werden, was die Bedienung mit Handschuhen oder Handprothesen ausschliesst. Da resistive Touchscreens auf Druck reagieren, lassen sie sich auch mit Handschuhen bedienen.

Man stellt mit Drücken einer gesonderten Taste oder mittels einer "Taste" auf dem Touchscreen einer solchen Uhr an einem Kosmetikbehälter das Hauptmenü ein, welches zum Beispiel folgende Auswahl bietet.
A: Einstellen des aktuellen Datums und der aktuellen Uhrzeit
B: Einstellen eines Ablaufdatums
C: Uhrfunktion: Anzeige des Kalenderjahrs, des Monats, des Tages und der Uhrzeit
D: Stoppuhr-und Wecker-Funktion

Wählt man A, so erscheint das zuletzt eingestellte Kalenderjahr, der Monat, der Tag und die Uhrzeit. Mit einer Taste oder einem Drehknopf 3 kann auf die verschiedenen Anzeigen Kalenderjahr, Monat, Tag und Uhrzeit auf dem Display 2 gewechselt werden. Bei jeder gewählten Zeitfunktion kann mit einer weiteren Taste oder einem Drehknopf 3 vorwärts oder rückwärts gescrollt werden, zum Einstellen der gewünschten Zeit. Der Vorgang wird abgeschlossen mit Drücken einer Taste SET. Damit ist die Uhr 1 gerichtet.

Wählt man die Funktion B, so lässt sich dort in gleicher Weise wie zur Funktion A ein gewünschter Ablaufzeitpunkt eines Produktes eingeben, meist ein bestimmtes Kalenderjahr mit Monat, wobei dann die Uhrzeit unerheblich ist. Weiter kann eine Alarmfunktion ein- oder ausgeschaltet werden. Durch Drücken der Taste SET ist auch diese Funktion nun programmiert. Bei Erreichen des gewählten Monats erklingt über einen eingebauten Lautsprecher ein akustischer Warnton, der durch Drücken der Taste SET verstummt. Voraussetzung für das Erklingen des Warntones ist, dass der Deckel der Dose geöffnet ist, damit nicht in Abwesenheit einer Benützerin dieser Warnton andauernd erklingt. Das kann realisiert sein, indem die Uhr nur dann ein Warnton-Signal generiert, wenn gewisse Voraussetzungen erfüllt sind, indem sie zum Beispiel sich in einer bestimmten Position befindet oder indem gewisse elektrische Kontakte geöffnet oder geschlossen sind. In der gewählten Funktion C wird die aktuelle Uhrzeit mit Tag, Monat und Kalenderjahr angezeigt. Bei Wahl des Menus D, der Stoppuhr-Funktion, zeigt die Uhr 00:00 an. Wie beim Einstellen der Uhrzeit kann nun eine Laufzeit gewählt werden, zum Beispiel 05:30, für 5 Minuten und 30 Sekunden. Diese Laufzeit wird mit der Taste SET bestätigt. Ein zweites Drücken der Taste SET stellt die Uhr auf Null, und wenn mit einer Starttaste die Uhr zu laufen beginnt, wird sie nach Erreichen von 05:30 einen Warnton abgeben. Damit kann zum Beispiel eine Einwirkzeit genau eingehalten werden, selbst wenn sich die Benützerin kurzzeitig von der Dose entfernt. Ebenso kann die Uhr dazu dienen, den Anwender an das Nutzungs-Intervall zu erinnern, z.B. alle drei Tage, einmal wöchentlich usw. Hierzu stellt man die Stoppuhr einfach auf eine solche Dauer ein, sodass sie zum gewünschten Zeitpunkt ein Signal abgibt, zum Beispiel in drei Tagen zur Aufweckzeit, wenn eine bestimmte Crème wieder aufgetragen werden sollte. So wird ein Vergessen des regelmässig in gewissen Intervallen zu applizierenden Wirkstoffes vermieden. Ausserdem besteht die Möglichkeit, dass mit der Uhr die Vorgabe der Einwirkzeit fixiert werden kann. Dies gilt auch bei der Aktivierung/Auslösung bei der Öffnung der Dose mittels Entfernung der Schutzfolie bei der Crème. Die Aktivierung bzw. Auslösung des Startens des Anzählens der Restlaufzeit kann auch durch Magnete erreicht werden, die beim Einsetzen der Kapsel den Start auslösen. Weil die Uhr eine Stoppuhr-Funktion bietet, kann sie selbstverständlich auch als Wecker bzw. Timer für andere Zwecke benützt werden. An dieser Stelle sei erwähnt, ohne das in einer besonderer Figur darzustellen, dass die eingebaute Uhr einen analog funktionierenden Display aufweisen kann, sodass also ein Stundenzeiger, ein Minuten- und ein Sekundenzeiger angezeigt werden, statt die Uhrzeit in digitaler Form zu präsentieren. In einer Luxusausführung ist sogar eine mechanische Uhr mit solchen Zeigern denkbar. Die Uhr, ob eine elektronische oder mechanische, kann mit einer Batterie bestückt sein, um sie mit Energie zu versorgen. In einer Variante kann es sich um einen wieder aufladbaren Akku handeln. An der Uhr oder am Behälter kann eine zugehörige Solarzelle verbaut sein, welche den Akku laufend wieder auflädt, oder der Akku wird über einen elektrischen Anschluss wieder aufgeladen.

Die Figur 23 zeigt eine Dose für die Aufbewahrung von Tabletten oder Pillen, von denen an jedem Wochentag eine einzelne eingenommen werden soll. Hierzu ist sie mit einer Behälterkapsel ausgerüstet, die in sieben Kreissegmente 56 aufgeteilt ist, für jeden Wochentag ein einzelnes Kreissegment. Die einzelnen Kreissegmente 56 sind deutlich mit dem betreffenden Wochentag beschriftet. Durch den Gebrauch einer solchen Dose wird sofort erkannt, wenn eine Tablette an einem bestimmten Wochentag liegenblieb. Ausserdem kann der Timer so eingestellt werden, dass der Benützer täglich zu einem wählbaren Zeitpunkt mit einem akustischen Signal an die Entnahme einer Tablette oder Pille erinnert wird.

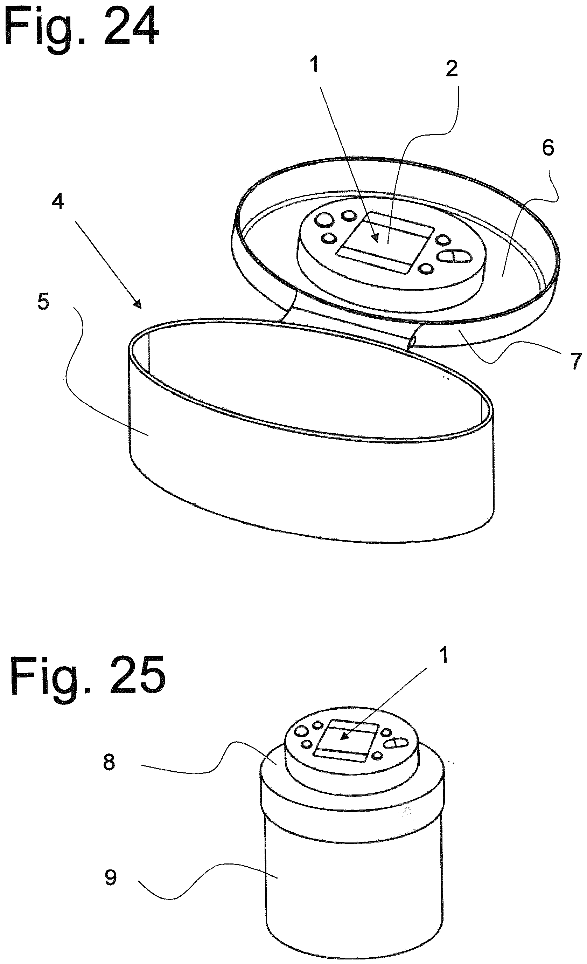

Eine Ausführung einer nicht erfindungsgemäßen Kosmetikdose 4 mit integrierter Zeit-Stoppuhr 1 ist in Figur 24 dargestellt. Eine Kosmetikdose 4 bildet hier einen ovalen Behälter 5 mit zugehörigem aufklappbaren Deckel 6 mit nach unten auskragendem Rand 7. In dieser Kosmetikdose 1 können verschiedene Kosmetik-Utensilien untergebracht werden - Pinsel, Pinzetten, Mascara-Stifte, Nagelfeilen etc. Daneben gehören auch verschiedene Schmink-Farben, Crèmes, Salben, Gels und Puder dazu. Gewisse Produkte haben eine Haltbarkeitsgrenze oder sie können darüber hinaus auch eine gewisse Einwirkzeit erfordern. Die Uhr 1 kann so programmiert sein, dass die ganzen Menüs wie oben schon beschrieben für verschiedene Produkte durchlaufen werden können, also zum Beispiel für zehn verschiedene Produkte. Die Funktion für die Ablaufzeit sowie die Funktion für die Einwirkzeit kann dann zehn verschiedenen Produkten zugeordnet werden, wobei jedem Produkt eine Nummer zugeordnet wird, und diese Nummer kann mittels eines Klebers am betreffenden Produkt in der Kosmetikdose aufgeklebt werden, oder sie wird mit einem wasserfesten Filzstift darauf geschrieben. Damit kann sichergestellt werden, dass niemals mehr ein zu altes Produkt verwendet wird und so können Hautreizungen oder Infektionen vermieden werden.

Eine nicht erfindungsgemäße andere Ausführung ist in Figur 25 gezeigt. Hier ist eine solche Uhr 1 oben auf dem Deckel 8 einer Kosmetik-Dose 9 als Behälter angebracht, wobei diese Dose zum Beispiel eine bestimmte Crème oder Salbe enthält. Es geht hier ganz generell um eine Verpackung gleich welcher Art, am Beispiel einer Dose gezeigt. Im Deckel 8 kann unten längs seines aufliegenden Deckelteils ein Federring eingebaut sein, der beim Entfernen des Deckels 8 von der Dose 9 entlastet wird. Nur dann ist die Alarmfunktion, das Abgeben eines Warntons möglich. Damit wird sichergestellt, dass kein Alarmton dauerhaft ertönen kann, wenn die Dose verschlossen ist und die Benützerin nicht anwesend ist.

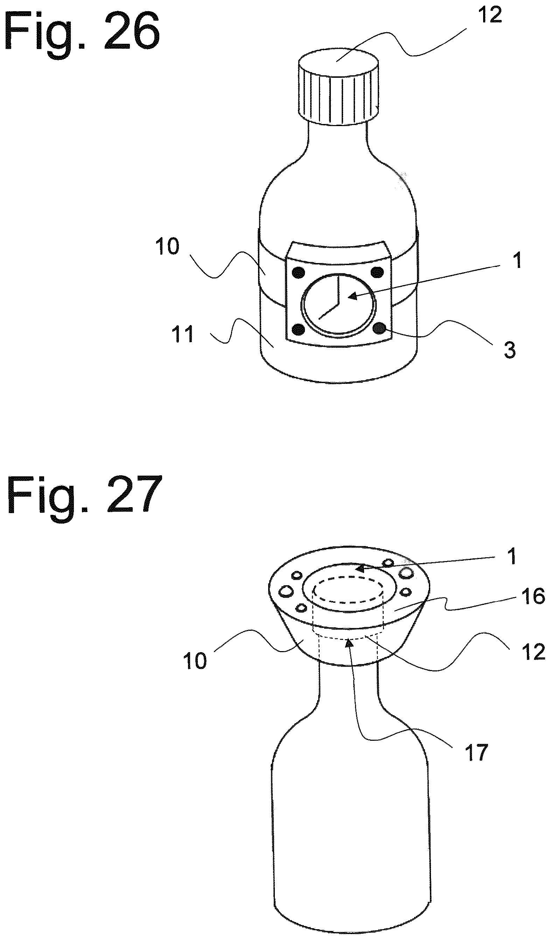

Die Figur 26 zeigt einen nicht erfindungsgemäßen Behälter in Form einer Kosmetik-Flasche, die mit einer Uhr 1 wie oben beschrieben ausgerüstet ist. Die Uhr 1 kann dabei wie eine Armbanduhr am Flaschenkörper 11 befestigt sein, mit zum Beispiel einem gummielastischen Band 10 oder mit einer Spannschnalle. Als Alternative kann die Uhr auch in der Flasche eingebaut sein oder in die Flaschenwand integriert sein. Die Flasche kann als Airless-Dispenser ausgeführt sein, die mit einem Dispenser ausgerüstet ist, welcher die Entnahme genau dosierten Flüssigkeitsmengen erlaubt.

In einer nicht erfindungsgemäßen Ausführung nach Figur 27 ist die Uhr 1 mit dem Flaschenverschluss verbunden bzw. ist mit einer Verschlusskappe 12 zusammengekoppelt. Es kann sich um ein Uhrengehäuse 16 handeln, das unten eine hohlzylindrische Ausnehmung 17 aufweist, mit welcher es über einen üblichen 28er oder 36er Drehverschluss 12 einer Flasche aufsetzbar ist. Die Innenwände der hohlzylindrischen Ausnehmung 17 können mit schiefwinklig zur Radialen des Hohlzylinders angeordneten Federstählen ausgerüstet sein, die ganz leicht vorstehen und die in Löserichtung mit der Aussenseite der Verschlusskappe 12 der Flasche verklemmen und damit ein bequemes Lösen der Verschlusskappe 12 mittels Drehen des Uhrengehäuses 16 ermöglichen.

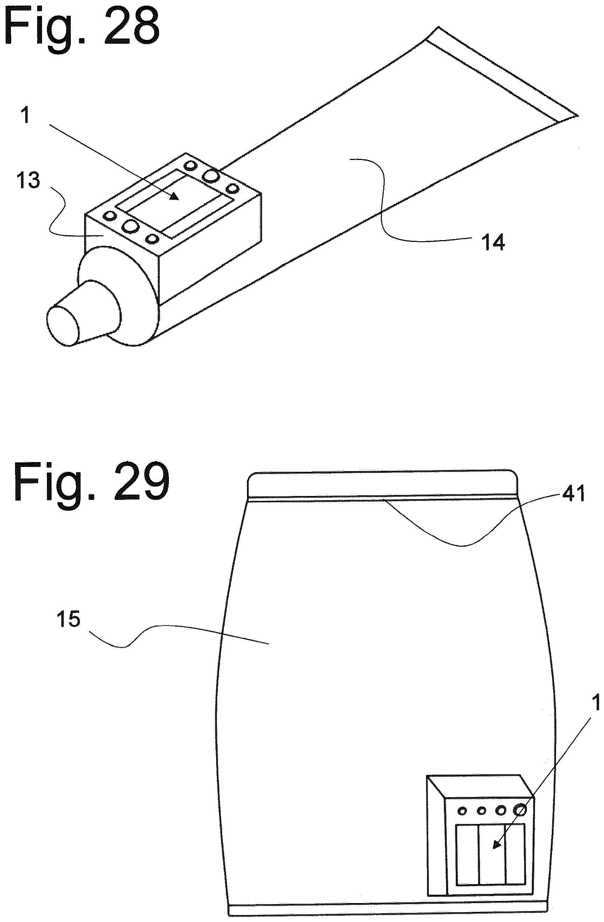

Die Figur 28 zeigt eine nicht erfindungsgemäße Ausführung, bei welcher eine Uhr 1 wie schon beschrieben ein Gehäuse aufweist, welches einen Sockel 13 für die Uhr 1 bildet, wobei der Sockel 13 so gestaltet ist, dass er auf den runden Umfang einer gefüllten Tube 14 passt. Auf derselben kann er mittels eines Klett-Verschlusses befestigt sein. Ein Streifen eines Teils eines Kettverschlusses wird auf die Tube 14 geklebt. Der zugehörige andere Streifen mit dem Gegenstück des Klettverschlusses wird auf die Innenseite der unteren Wölbung des Sockels 13 aufgeleimt. Wenn die Tube 14 dann nahezu aufgebraucht ist, lässt sich diese Uhr 1 wieder von ihr entfernen und auf einer neuen Tube anbringen.

Die Figur 29 zeigt eine nicht erfindungsgemäße Ausführung eines Kosmetik-Beutels 15 mit einem Druckverschluss 41. Die Uhr 1 ist mit ihrem Gehäuse auf dem Beutel 15 befestigt. Ein Streifen eines Teils eines Kettverschlusses wird auf die Aussenseite des Beutels 15 geklebt, und der andere Streifen auf der Unterseite des Gehäuses der anzubringenden Uhr 1 aufgeleimt. Wenn der Beutelinhalt aufgebraucht ist, lässt sich diese Uhr 1 wieder von ihm entfernen und auf einem neuen Beutel anbringen.

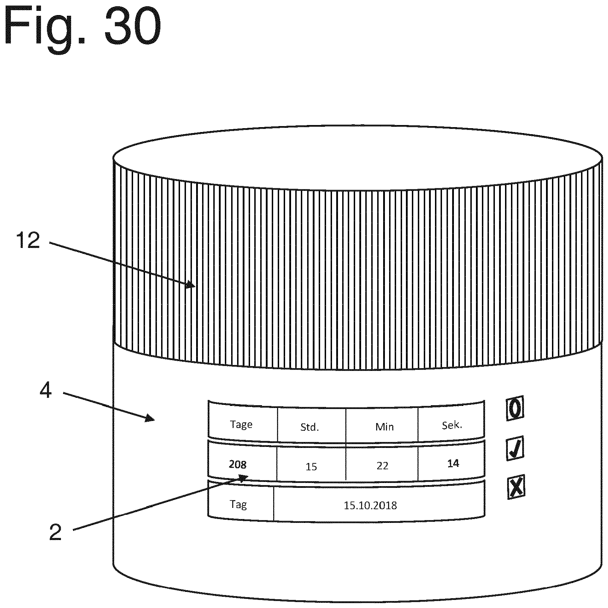

Die Figur 30 zeigt eine Ausführung einer Kosmetik-Dose 4 mit einem aufschraubbaren Deckel 12. Die Uhr 1 ist mit ihrem Gehäuse in die Wand der Dose integriert und zeigt, wie ein durchdachter Display 2 gestaltet sein kann. Rechts neben dem breiten Display 2 sind drei Kästchen erkennbar. Wenn im obersten Kästchen zum Beispiel ein Blaulicht angezeigt wird, so bedeutet das, dass diese Dose 4 noch gar nie geöffnet wurde, oder in Bezug auf den Inhalt: **noch nicht aktiv.** Es handelt sich um eine Erstöffnungs-Garantie. Wenn das mittlere Kästchen grün leuchtet, so bedeutet das, dass der Inhalt der bereits einmal geöffneten Dose in Ordnung ist, bereit für eine Anwendung, also **Inhalt okay.** Wenn das unterste Kästchen rot leuchtet, so bedeutet das: **Inhalt unbrauchbar.** Das ist dann der Fall, wenn der Inhalt ein gewisses Alter überschritten hat. Im grossen Display wird auf der obersten Zeile von links nach rechts angegeben: Tag, Stunde, Minute, Sekunde. Darunter sind hier spezifische Zahlen angezeigt, also Beispiel von links: 208, das heisst der Inhalt steht noch 208 Tage, 15 Stunden, 22 Minuten und 14 Sekunden zur Verwendung bereit. Diese Zeitspanne läuft wie in einer Sanduhr im Sekundentakt ab, bis der Display 000, 00, 00, 00 zeigt und dann sofort das rote Warnlicht unten rechts aufleuchtet. In der Zeile ganz unten im Display 2 wird der aktuelle Kalendertag und die aktuelle Uhrzeit angezeigt.

Im Weiteren kann die Uhr dazu dienen, den Anwender an das Nutzungs-Intervall zu erinnern, z.B. alle drei Tage, einmal wöchentlich usw. Eine weitere Funktion besteht darin, die Einwirkzeit des Produkts anzeigen zu lassen, damit ein optimales Ergebnis erzielt wird. Hinzu kommen noch viele weitere Funktionen, die mit Hilfe von akustischen und visuellen Signalen arbeiten, und welche die Anwender beim korrekten Gebrauch der Kosmetikprodukte unterstützen können. Egal welche Inhaltsstoffe die Kapsel oder Dose enthält, die Elektronik kann weitere Funktionen übernehmen und zum Beispiel durch Übermittlung von Daten via eine App eine Nachbestellung von einer oder mehreren Kapseln auslösen, oder neue Produkteinformationen zur Anzeige bringen, die von einer App zugesendet werden.

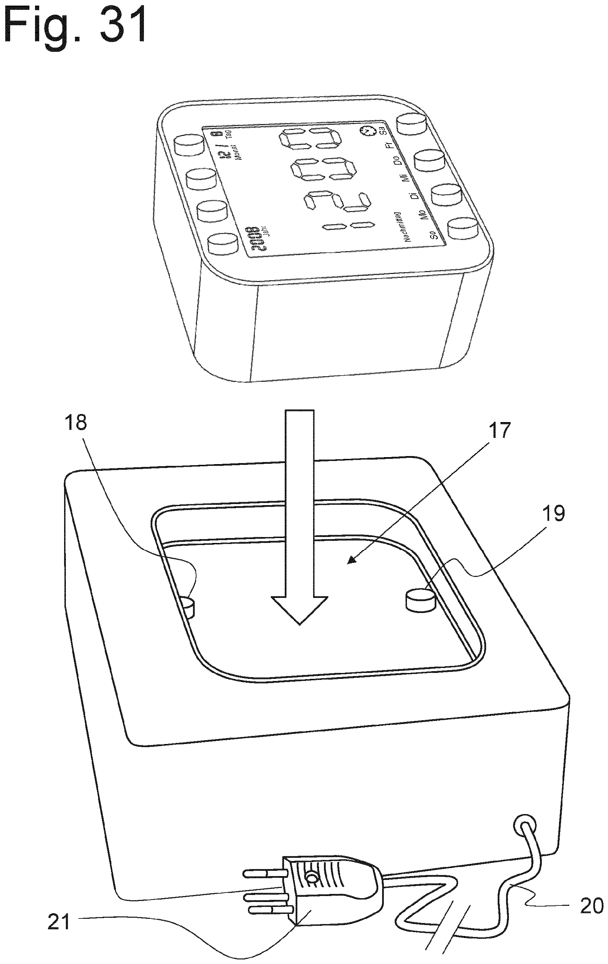

Vorteilhaft schliesst der Behälter, wenn mit einem aufladbaren Akku ausgerüstet, eine zugehörige Dockingstation bzw. Ladestation mit Anschlusskabel 20 für das elektrische Haushaltnetz ein, wie in Figur 31 dargestellt. Der Behälter kann in die Aufnahme-Vertiefung 17 eingesetzt werden, und dann schliessen die dortigen elektrischen Kontakte 18, 19 mit entsprechenden Polen an der Unterseite des Behälters und der Akku wird fortan wieder aufgeladen, oder die Aufladung erfolgt kabellos mittels Induktion. Diese Docking-Station verfügt über ein Netzkabel 20 mit zugehörigem Netzstecker 21, der an jeder Haushalt-Steckdose eingesteckt werden kann, nötigenfalls mittels eines Adapters für den jeweiligen Landesstandard für Steckdosen. Die Ladestation schliesst einen Transformator ein, um den Netzstrom auf die Akku-Spannung zu transformieren und eine elektronische Schaltung zum Unterbrechen des Ladestroms, sobald der Akku wieder vollgeladen ist. Der Behälter ist durch mechanisches Anstecken oder Aufsetzen lösbar mit dieser Dockingstation verbindbar, sodass die elektrischen Kontakte mit dem Aufsetzen automatisch geschlossen werden, über welche der aufladbare Akku zur elektronischen Uhr mit Stoppuhr- und Wecker-Funktion aufladbar ist. Der Display des Behälters kann über eine Ladezustand-Anzeige verfügen, sodass die Benützerin jederzeit ersehen kann, wie lange der Behälter bzw. die Kosmetik-Dose autark benützbar ist, wenn sie auf Reisen ist. Die Dockingstation ist so gestaltet, dass verschiedene Behälter standardisiert in sie einpassen, zum jeweiligen Aufladen der inliegenden Akkus.

Schliesslich kann der Behälter als Dose oder Beutel gestaltet sein und mit einem solchen Timer ausgerüstet sein, der auf einen bestimmten einstellbaren Zeitpunkt hin, also zeitgesteuert, das Abspielen einer Ansage, zum Beispiel eines personalisierten Glückwunsches, eines Gedichtes oder einer Melodie oder sogar eines Video-Clips auf dem Display zum Abspielen auslöst. Dazu kann die Elektronik der Dose oder des Beutels auf einen Datenträger zurückgreifen, der an der Dose oder am Beutel in eine daran vorhandene USB-Schnittstelle einsteckbar ist, sodass vom Benützer beliebige Audio- oder Video-Inhalte auf diesen UBS-Datenspeicher kopierbar sind, die dann zum gewählten Zeitpunkt abgespielt werden. Damit kann die Dose oder kann der Beutel zum wirkungsvollen Überreichen von Geschenken dienen, die an eine entfernt lebende Person versandt werden. Die Übergabe kann damit als Überraschungseffekt mit einer begleitenden Audio- oder Video erfolgen. So kann in einem Begleitbrief dem Empfänger mitgeteilt werden, dass er die Dose oder den Beutel nicht sogleich beim Empfang öffnen dürfe, sondern ihn auf den Tisch stellen soll, und erst wenn alle seine geladenen Gäste anwesend seien, er zum bekanntgegebenen Zeitpunkt das Weitere abwarten soll. So können zum Beispiel ein Kleinod, ein Schmuckstück oder Juwelen sehr wirkungsvoll in Szene gesetzt überreicht werden, indem der Deckel einer Dose zum gewählten Zeitfunkt automatisch öffnet oder auch der Beutel automatisch aufgespreizt wird. Im Fall einer Dose kann der Deckel hierzu gegen die Kraft von Federn geschlossen sein und mittels Permanentmagneten im geschlossenen Zustand gehalten sein. Ein Elektromagnet wird zeitgesteuert betätigt, sodass er die Kräfte der Permanentmagnete kurzzeitig überwindet und hernach der Deckel kraft der Federn aufspringt. In gleicher Weise kann ein Beutel zum Beispiel eine Öffnung aufweisen, welche von zwei gebogenen Federstahlstäben offengehalten wird. Kraft von Permanentmagnenten werden die beiden Federstahlstäbe, welche sich beidseits längs der Beutelöffnung erstrecken, in die gerade Lage gezwungen, sodass die Öffnung des Beutels mit einem geschlossenen Schlitz geschlossen gehalten wird. Ein Elektromagnet überwindet die Kraft der Permanentmagneten zu einem einstellbaren Zeitpunkt kurzzeitig, sodass dann die Beutelöffnung aufgrund der Federkräfte der Federstahlstäbe aufspringt. Zunächst startet dann zum Beispiel eine persönlich gestaltete Ansage, etwa in Form einer Audio- oder Videobotschaft, und im entscheidenden Moment der Botschaft springt der Deckel oder der Beutel auf und offenbart den Inhalt und präsentiert ihn überraschend und wirkungsvoll.

### Ziffernverzeichnis

- 1: Uhr
- 2: Display
- 3: Drehknopf
- 4: Kosmetikdose
- 5: Behälter
- 6: Deckel
- 7: auskragender Rand
- 8: Deckel mit Uhr
- 9: Dose, Airless Dispenser, Verpackung
- 10: gummielastisches Band
- 11: Flaschenkörper
- 12: Verschlusskappe, Drehverschluss
- 13: Sockel
- 14: Tube
- 15: Kosmetikbeutel
- 16: Uhrengehäuse
- 17: Aufnahme-Vertiefung
- 18: elektrischer Kontakt
- 19: elektrischer Kontakt
- 20: Netzkabel
- 21: Netzstecker
- 22: Kapsel mit Kosmetikprodukt, (inner jar)
- 23: Bodenteil des Behälters
- 24: Gehäuse
- 25: Deckel
- 26: elektronische Platine
- 27: Hall-Sensor
- 28: innerer Einsatz des Deckels 25
- 29: Permanentmagnete am Einsatz 28
- 30: Permanentmagnete am Deckel
- 31: Ausnehmung im Gehäuse 24
- 32: Führungsstifte im Bodenteil 23
- 33: Druckfeder
- 34: Aufsetzplatte
- 35: Sichtfenster aus Acrylglas
- 36: Anzeige Ladezustand Akku/Batterie
- 37: Dichtring
- 38: Siegelfolie
- 39: USB-Schnittstelle für Aufladekabel
- 40: Wiederaufladbarer Akku
- 41: Druckverschluss
- 42: Aussparung in rundem Behälter
- 43: Stift zum Aktivieren der Timerfunktion
- 44: Oberes Halteplättchen für Stift 43
- 45: Auslöse-Plättchen 45 unten am Stift 43
- 46: Boden des Bodenteils 23
- 47: dicke Rippe oder Rille an der Kapsel-Aussenwand (inner jar)
- 48: dünne Rippe oder Rille an der Kapsel-Aussenwand (inner jar)
- 49: Innenwand Aufnahmezylinder 52 für die Kapsel 22
- 50: dünne Nuten in Aufnahmezylinder
- 51: dicke Nut in Aufnahmezylinder
- 52: Aufnahmezylinder, im Innern des Behälters
- 53: Nut im Stift 43
- 54: Profil mit eckigem Querschnitt an der Kapsel 22
- 55: Aufnahmenuten mit eckigem Querschnitt in der Innenwand 49 des Aufnahmezylinders 52
- 56: Kreissegmente in der Kapsel
- 57: Mechanischer Kontakt oder Verschluss am Rand

## Patentansprüche

1. Behälter (5, 4) für Kosmetika und andere Produkte mit begrenzter Verwendungszeit oder für die zeitgesteuerte Präsentation von Produkten, in welchem eine mechanische, aufziehbare Uhr oder eine elektronische Uhr (1) mit Akku oder Batterie und zugehörigem Display (2) eingebaut ist, in beiden Fällen mit Stoppuhr- und Wecker-Funktion zur Anzeige der Lebensdauer des enthaltenen Produktes oder zur zeitgerechten Präsentation des eingelegten Produktes,
**dadurch gekennzeichnet,**
**dass** er einen Aufnahmezylinder (52) aufweist, zum Einsetzen einer mit einer Siegelfolie (38) verschliessbaren Kapsel (22) mit dem Produkt als Inhalt, und der Aufnahmezylinder (52) in seiner Innenwand Nuten (50, 51) unterschiedlicher Grösse oder unterschiedlicher Profile aufweist, und die einzusetzende, austauschbare Kapsel (22) je nach Drehlage dazu passende Rippen (48, 47) oder Rillen an ihrer Aussenwand aufweist, sodass die Kapsel (22) in nur einer einzigen Drehlage in den Aufnahmezylinder (52) einsetzbar ist, und damit die Art der Kapsel (22) erkennt und weiter dass der Behälter (1) ein Bodenteil (23), ein Gehäuse (24) mit Ausnehmung (31) zum Einsetzen der Kapsel (22) in den Aufnahmezylinder (52) sowie einen Deckel (25) einschliesst, wobei der Bodenteil (23) die elektronische Uhr sowie den Akku (40) oder die Batterie enthält, und einen Display (2) und der Bodenteil (23) eine Aufsetzplatte (34) enthält, die auf Einsatzstiften (32) ruht, und auf welche ein druckfederbelasteter, unten aus dem Boden des Bodenteils (23) ragender Stift (43) gerichtet ist, der durch Auslösen der Druckfeder (33) an der Platine (26) anschlägt und dort elektrische Kontakte schliesst, zum Auslösen der Timerfunktion der elektronische Schaltung.

2. Behälter (5) nach Anspruch 1, **dadurch gekennzeichnet, dass** er eine elektronische Schaltung mit Zeitelement als elektronische Uhr auf einer elektronischen PCBA-Platine (26) einschliesst, die mit dem zugehörigen Display (2) verbunden ist, zur optischen Anzeige mindestens der Restlaufzeit der Lebensdauer des im Innern des Behälter (5) enthaltenen Produktes, sowie wahlweise zur optischen Anzeige von Text und Bildern bzw. Filmen.

3. Behälter (5) nach Anspruch 2, **dadurch gekennzeichnet, dass** er zusätzlich mit einem Lautsprecher ausgerüstet ist, zum Auslösen und Abspielen einer akustischen und/oder visuellen Produktpräsentation auf dem Display ab einem Speichermedium.

4. Behälter (5) nach einem der Ansprüche 1 bis 3, **dadurch gekennzeichnet, dass** ein Hall-Sensor (27) eingebaut ist, welcher das Einsetzen einer Kapsel (22) durch Veränderung eines Magnetfeldes feststellt und damit die Timer-Funktion der elektronische Schaltung startet.

5. Behälter (5) nach einem der vorangehenden Ansprüche, **dadurch gekennzeichnet, dass** eine elektronische Uhr (1) mit Stoppuhr- und Wecker-Funktion mit zugehörigem aufladbaren Akku eingebaut ist, wobei der Behälter eine zugehörige Dockingstation mit Anschlusskabel (20) für das elektrische Haushaltnetz einschliesst, an welche der Behälter durch mechanisches Anstecken oder Aufsetzen lösbar anschliessbar ist, sodass elektrische Kontakte geschlossen werden, über welche der aufladbare Akku zur elektronischen Uhr mit Stoppuhr- und Wecker-Funktion aufladbar ist.

6. Behälter (5) nach einem der vorangehenden Ansprüche, **dadurch gekennzeichnet, dass** die eingebaute Uhr (1) eine elektronische Uhr mit elektronischem Display (2) für eine digitale oder analoge Anzeige ist, und an ihrem Gehäuse Tasten oder Drehknöpfe (3) angebracht sind, mittels derer die inliegende elektronische Schaltung bedienbar ist, wobei diese elektronische Schaltung mindestens folgende Funktionen bietet und auf dem Display (2) anzeigbar macht:
A: Einstellen des aktuellen Datums und der aktuellen Uhrzeit,
B: Einstellen eines Ablaufdatums,
C: Uhrfunktion: Anzeige des Kalenderjahrs, des Monats, des Tages und der Uhrzeit,
D: Stoppuhr-und Wecker-Funktion
und dass die Uhr (1) von einem wieder aufladbaren Akku (40) mit Energie versorgbar ist, der über eine zugehörige Solarzelle ladbar ist, und wobei eine Anzeige als Erstöffnungsgarantie wirkt, indem sie aufleuchtet, solange der Behälter noch nie geöffnet wurde, eine weitere Anzeige bei einmal geöffnetem Behälter anzeigt, ob der Inhalt noch in Ordnung ist, und eine dritte Anzeige anzeigt, wenn der Inhalt ein einstellbares Alter überschritten hat.

7. Behälter (5, 4) nach einem der Ansprüche 1 bis 2, **dadurch gekennzeichnet, dass** der Behälter (5) eine Dose (4) mit darauf passendem Deckel (6) mit nach unten auskragendem Rand (7) ist, wobei der Deckel über eine scharnierende Verbindung von der Dose (5) über mehr als 90° aufklappbar ist, und wobei die Uhr (1) in die Unterseite des Deckels (6) eingebaut ist und ihre Alarmfunktionen nur in einer schiefwinkligen, mit dem Display nach oben zeigenden Position wirksam sind.

8. Behälter (5, 4) nach einem der Ansprüche 1 bis 2, **dadurch gekennzeichnet, dass** der Behälter eine Dose (9) mit darauf passendem Deckel (8) mit nach unten auskragendem Rand ist, wobei die Uhr (1) auf der Oberseite des Deckels (8) eingebaut ist und der Deckel (8) über belastete Federringe auf dem Dosenrand aufliegt, sodass die Alarmfunktion der Uhr (1) nur bei entlasteten Federringen wirksam ist.

9. Behälter (5, 4) nach einem der Ansprüche 1 bis 2, **dadurch gekennzeichnet, dass** der Behälter eine Flasche ist, und die Uhr (1) wie eine Armbanduhr mittels eines gummielastischen Bandes (10) um den Umfang des Flaschenkörpers (11) anlegbar ist.

10. Behälter (5, 4) nach einem der Ansprüche 1 bis 2, **dadurch gekennzeichnet, dass** der Behälter eine Flasche ist, und die Uhr (1) in die Flasche eingebaut ist oder in die Flaschenwandung eingebaut ist.

11. Behälter (5, 4) nach einem der Ansprüche 1 bis 2, **dadurch gekennzeichnet, dass** der Behälter eine Flasche ist, und die Uhr (1) in einem Gehäuse (16) untergebracht ist, welches auf seiner Unterseite eine hohlzylindrische Ausnehmung (17) mit schiefwinklig zur Radialen darin angeordneten Federstählen aufweist, die knapp in die hohlzylindrische Ausnehmung ragen, und dieses Gehäuse (16) über die Dreh-Verschlusskappe (12) der Flasche mit Pass-Sitz stülpbar ist, und die Dreh-Verschlusskappe (12) bei Drehen in Löserichtung infolge Verklemmens der Federstähle von der Flasche losschraubbar ist.

12. Behälter (5, 4) nach einem der Ansprüche 1 bis 2, **dadurch gekennzeichnet, dass** der Behälter eine Tube (14) ist, und die Uhr (1) in einem Gehäuse (13) untergebracht ist, welches unten einen gewölbten Sockel (13) ausbildet, sodass die Uhr auf den Umfang im Vorderbereich der Tube (14) passend aufsetzbar ist, wobei der Sockel (13) auf der Tube (14) mittels eines oder mehrerer Klettverschlüsse gehalten ist.

13. Behälter (5, 4) nach einem der Ansprüche 1 bis 2, **dadurch gekennzeichnet, dass** der Behälter ein wieder verschliessbarer Kunststoff-Beutel (15) ist, und die Uhr (1) in einem Gehäuse untergebracht ist, welches mittels einer ebenen Unterseite auf den Beutel (15) aufsetzbar ist, wobei das Gehäuse auf dem Beutel mittels eines oder mehrerer Klettverschlüsse gehalten ist.

14. Behälter nach Anspruch 2 für die zeitgesteuerte Präsentation von Produkten, **dadurch gekennzeichnet, dass** er als Dose oder Beutel ausgeführt ist, wobei er einen Mechanismus zum automatischen zeitgesteuerten Öffnen des Deckels der Dose oder des Beutels aufweist, sowie eine USB-Schnittstelle zum Einstecken eines Datenträgers, sowie einen Lautsprecher und Display zum Abspielen von Audio- und Videobotschaften ab dem Datenträger, gesteuert durch die elektronische Schaltung auf der PCBA-Platine (Printed Circuit Board Assembled).

## Claims

1. Container (5, 4) for cosmetics and other products with a limited period of use or for the time-controlled presentation of products, in which a mechanical, wind-up clock or an electronic clock (1) with rechargeable battery or battery and associated display (2) is installed, in both cases with stopwatch and alarm clock function to indicate the service life of the product contained or for the time-controlled presentation of the inserted product,
**characterized in that**
**in that** it has a receiving cylinder (52) for inserting a capsule (22) which can be closed with a sealing film (38) and contains the product, and the receiving cylinder (52) has grooves (50, 51) of different sizes or different profiles in its inner wall, and the replaceable capsule (22) to be inserted has matching ribs (48, 47) or grooves on its outer wall depending on the rotational position, so that the capsule (22) can be inserted into the receiving cylinder (52) in only a single rotational position, the interchangeable capsule (22) to be inserted has ribs (48, 47) or grooves on its outer wall which match depending on the rotational position, so that the capsule (22) can be inserted into the receiving cylinder (52) in only a single rotational position, and thus recognizes the type of capsule (22), and furthermore that the container (1) has a base part (23), a housing (24) with a recess (31) for inserting the capsule (22) into the receiving cylinder (52) and a cover (25), wherein the base part (23) contains the electronic clock and the rechargeable battery (40) or the battery, and a display (2) and the base part (23) contains a mounting plate (34), which rests on insert pins (32), and on which a compression-spring-loaded pin (43) projecting from the bottom of the base part (23) is directed, which pin strikes against the circuit board (26) by triggering the compression spring (33) and closes electrical contacts there for triggering the timer function of the electronic circuit.

2. Container (5) according to claim 1, **characterized in that** it includes an electronic circuit with time element as an electronic clock on an electronic PCBA board (26) connected to the associated display (2), for visual indication of at least the remaining life of the product contained inside the container (5), and optionally for visual display of text and images or films.

3. Container (5) according to claim 2, **characterized in that** it is additionally equipped with a loudspeaker for triggering and playing an acoustic and/or visual product presentation on the display from a storage medium.

4. Container (5) according to one of claims 1 to 3, **characterized in that** a Hall sensor (27) is installed, which detects the insertion of a capsule (22) by changing a magnetic field and thus starts the timer function of the electronic circuit.

5. Container (5) according to one of the preceding claims, **characterized in that** an electronic clock (1) with stopwatch and alarm clock function with associated rechargeable battery is installed, the container including an associated docking station with connection cable (20) for the household electrical network, to which docking station the container can be detachably connected by mechanical plugging or attachment, so that electrical contacts are closed via which the rechargeable battery for the electronic clock with stopwatch and alarm clock function can be recharged.

6. Container (5) according to one of the preceding claims, **characterized in that** the built-in clock (1) is an electronic clock with an electronic display (2) for a digital or analogue display, and buttons or rotary knobs (3) are attached to its housing, by means of which the internal electronic circuit can be operated, this electronic circuit providing at least the following functions and making them displayable on the display (2):
A: Set the current date and time,
B: Setting an expiration date,
C: Clock function: Displays the calendar year, month, day and time,
D: Stopwatch and alarm clock function
and **in that** the watch (1) can be supplied with energy from a rechargeable battery (40) which can be charged via an associated solar cell, and wherein an indicator acts as a first-opening guarantee by lighting up as long as the container has never been opened, a further indicator indicates whether the contents are still in order once the container has been opened, and a third indicator indicates when the contents have exceeded an adjustable age.

7. Container (5, 4) according to one of claims 1 to 2, **characterized in that** the container (5) is a can (4) with a lid (6) fitting thereon with a downwardly projecting edge (7), wherein the lid can be hinged open by more than 90° from the can (5) via a hinged connection, and wherein the clock (1) is built into the underside of the lid (6) and its alarm functions are only effective in an oblique-angled position with the display pointing upwards.

8. Container (5, 4) according to one of claims 1 to 2, **characterized in that** the container is a can (9) with a lid (8) fitting thereon with a downwardly projecting edge, the clock (1) being installed on the top of the lid (8) and the lid (8) resting on the edge of the can via loaded spring washers, so that the alarm function of the clock (1) is only effective when the spring washers are relieved.

9. Container (5, 4) according to one of claims 1 to 2, **characterized in that** the container is a bottle, and the watch (1) can be placed around the circumference of the bottle body (11) like a wristwatch by means of a rubber-elastic band (10).

10. Container (5, 4) according to one of claims 1 to 2, **characterized in that** the container is a bottle, and the clock (1) is built into the bottle or is built into the bottle wall.

11. Container (5, 4) according to one of claims 1 to 2, **characterized in that** the container is a bottle, and the watch (1) is accommodated in a housing (16) which has on its underside a hollow cylindrical recess (17) with spring stems arranged therein at an oblique angle to the radial, which project just into the hollow cylindrical recess, and this housing (16) can be slipped over the rotary closure cap (12) of the bottle with a tight fit, and the rotary closure cap (12) can be unscrewed from the bottle when it is turned in the direction of loosening as a result of the spring steels jamming.

12. Container (5, 4) according to one of claims 1 to 2, **characterized in that** the container is a tube (14), and the watch (1) is accommodated in a housing (13) which forms a curved base (13) at the bottom, so that the watch can be fitted onto the circumference in the front region of the tube (14), the base (13) being held on the tube (14) by means of one or more hook-and-loop fasteners.

13. Container (5, 4) according to one of claims 1 to 2, **characterized in that** the container is a reclosable plastic bag (15), and the watch (1) is accommodated in a housing which can be placed on the bag (15) by means of a flat underside, the housing being held on the bag by means of one or more Velcro fasteners.

14. Container according to claim 2 for the time-controlled presentation of products, **characterized in that** it is designed as a can or bag, having a mechanism for the automatic time-controlled opening of the lid of the can or bag, as well as a USB interface for inserting a data carrier, and a loudspeaker and display for playing audio and video messages from the data carrier, controlled by the electronic circuit on the PCBA board (Printed Circuit Board Assembled).

## Revendications

1. Récipient (5, 4) pour produits cosmétiques et autres produits à durée d'utilisation limitée ou pour la présentation temporisée de produits, dans lequel est incorporée une montre mécanique à remonter ou une montre électronique (1) avec accumulateur ou batterie et écran d'affichage associé (2), dans les deux cas avec fonction de chronomètre et de réveil pour indiquer la durée de vie du produit contenu ou pour présenter le produit inséré en temps voulu,
**caractérisé en ce que**
**en ce qu'**il présente un cylindre de réception (52) pour l'insertion d'une capsule (22) pouvant être fermée par une feuille de scellement (38) et contenant le produit, et **en ce que** le cylindre de réception (52) présente dans sa paroi intérieure des rainures (50, 51) de différentes tailles ou de différents profils, et **en ce que** la capsule (22) à insérer présente, en fonction de sa position, des rainures de différentes tailles ou de différents profils, capsule interchangeable (22) présente, selon la position de rotation, des nervures (48, 47) ou des rainures adaptées à celles-ci sur sa paroi extérieure, de sorte que la capsule (22) peut être insérée dans le cylindre de réception (52) en une seule position de rotation, et reconnaît ainsi le type de capsule (22), et en outre **en ce que** le récipient (1) présente une partie de fond (23), un boîtier (24) avec un évidement (31) pour l'insertion de la capsule (22) dans le cylindre de réception (52) ainsi qu'un couvercle (25), la partie de fond (23) contenant la montre électronique ainsi que l'accumulateur (40) ou la pile, et un écran (2) et la partie de fond (23) contenant une plaque de pose (34), qui repose sur des broches d'insertion (32) et sur laquelle est dirigée une broche (43) sollicitée par un ressort de pression et dépassant par le bas du fond de la partie de fond (23), qui, par déclenchement du ressort de pression (33), vient buter contre la platine (26) et y ferme des contacts électriques, pour déclencher la fonction de minuterie du circuit électronique.

2. Conteneur (5) selon la revendication 1, **caractérisé en ce qu'**il comprend un circuit électronique avec un élément de temps comme une horloge électronique sur une carte électronique PCBA (26), qui est reliée à l'afficheur (2) correspondant, pour l'affichage optique au moins du temps restant de la durée de vie du produit contenu à l'intérieur du conteneur (5), ainsi que, en option, pour l'affichage optique de texte et d'images ou de films.

3. Conteneur (5) selon la revendication 2, **caractérisé en ce qu'**il est en outre équipé d'un haut-parleur, pour déclencher et reproduire une présentation sonore et/ou visuelle du produit sur l'écran à partir d'un support de stockage.

4. Récipient (5) selon l'une des revendications 1 à 3, **caractérisé en ce qu'**un capteur à effet Hall (27) est intégré, lequel détecte l'insertion d'une capsule (22) par la variation d'un champ magnétique et démarre ainsi la fonction de minuterie du circuit électronique.

5. Récipient (5) selon l'une des revendications précédentes, **caractérisé en ce qu'**une montre électronique (1) avec fonction de chronomètre et de réveil est intégrée avec un accumulateur rechargeable associé, le récipient comprenant une station d'accueil associée avec un câble de raccordement (20) pour le réseau électrique domestique, auquel le récipient peut être raccordé de manière amovible par enfichage ou mise en place mécanique, de sorte que des contacts électriques sont fermés, par lesquels l'accumulateur rechargeable peut être rechargé pour la montre électronique avec fonction de chronomètre et de réveil.

6. Conteneur (5) selon l'une quelconque des revendications précédentes, **caractérisé en ce que** la montre incorporée (1) est une montre électronique avec un écran électronique (2) pour un affichage numérique ou analogique, et des touches ou des boutons rotatifs (3) sont montés sur son boîtier, au moyen desquels le circuit électronique incorporé peut être commandé, ce circuit électronique offrant au moins les fonctions suivantes et pouvant être affiché sur l'écran (2) :
A : Réglage de la date et de l'heure actuelles,
B : Définir une date d'expiration,
C : Fonction horloge : affichage de l'année civile, du mois, du jour et de l'heure,
D : fonction chronomètre et réveil
et **en ce que** la montre (1) peut être alimentée en énergie par un accumulateur rechargeable (40) qui peut être chargé par l'intermédiaire d'une cellule solaire associée, et dans lequel un indicateur agit comme garantie de première ouverture en s'allumant tant que le récipient n'a jamais été ouvert, un autre indicateur indique, lorsque le récipient a été ouvert une fois, si le contenu est encore en bon état, et un troisième indicateur indique lorsque le contenu a dépassé un âge réglable.

7. Récipient (5, 4) selon l'une quelconque des revendications 1 à 2, **caractérisé en ce que** le récipient (5) est une boîte (4) sur laquelle s'adapte un couvercle (6) avec un bord (7) faisant saillie vers le bas, le couvercle pouvant être ouvert à plus de 90° par la boîte (5) par l'intermédiaire d'une liaison à charnière, et la montre (1) étant encastrée dans la face inférieure du couvercle (6) et ses fonctions d'alarme n'étant efficaces que dans une position inclinée, l'écran étant tourné vers le haut.

8. Récipient (5, 4) selon l'une des revendications 1 à 2, **caractérisé en ce que** le récipient est une boîte (9) sur laquelle s'adapte un couvercle (8) dont le bord fait saillie vers le bas, la montre (1) étant montée sur la face supérieure du couvercle (8) et le couvercle (8) reposant sur le bord de la boîte par l'intermédiaire de rondelles élastiques chargées, de sorte que la fonction d'alarme de la montre (1) n'est efficace que lorsque les rondelles élastiques sont déchargées.

9. Récipient (5, 4) selon l'une des revendications 1 à 2, **caractérisé en ce que** le récipient est une bouteille, et la montre (1) peut être mise en place autour de la périphérie du corps (11) de la bouteille, comme une montre-bracelet, au moyen d'une bande (10) élastique en caoutchouc.

10. Récipient (5, 4) selon l'une quelconque des revendications 1 à 2, **caractérisé en ce que** le récipient est une bouteille, et la montre (1) est incorporée dans la bouteille ou est incorporée dans la paroi de la bouteille.

11. Récipient (5, 4) selon l'une des revendications 1 à 2, **caractérisé en ce que** le récipient est une bouteille, et la montre (1) est logée dans un boîtier (16) qui présente sur sa face inférieure un évidement cylindrique creux (17) avec des barres élastiques disposées à l'intérieur selon un angle oblique par rapport à la radiale, qui dépassent à peine dans l'évidement cylindrique creux, et ce boîtier (16) peut être enfilé sur le capuchon de fermeture rotatif (12) de la bouteille avec ajustement, et le capuchon de fermeture rotatif (12) peut être dévissé de la bouteille lorsqu'on le tourne dans le sens du desserrage par suite du coincement des aciers à ressort.

12. Récipient (5, 4) selon l'une des revendications 1 à 2, **caractérisé en ce que** le récipient est un tube (14), et la montre (1) est logée dans un boîtier (13) qui forme un socle bombé (13) en bas, de sorte que la montre peut être posée de manière ajustée sur la circonférence dans la zone avant du tube (14), le socle (13) étant maintenu sur le tube (14) au moyen d'une ou plusieurs fermetures velcro.

13. Conteneur (5, 4) selon l'une quelconque des revendications 1 à 2, **caractérisé en ce que** le conteneur est un sac en plastique refermable (15), et la montre (1) est logée dans un boîtier qui peut être placé sur le sac (15) au moyen d'une face inférieure plane, le boîtier étant maintenu sur le sac au moyen d'une ou plusieurs fermetures velcro.

14. Conteneur selon la revendication 2 pour la présentation temporisée de produits, **caractérisé en ce qu'**il se présente sous la forme d'une boîte ou d'un sachet, présentant un mécanisme pour l'ouverture automatique temporisée du couvercle de la boîte ou du sachet, ainsi qu'une interface USB pour l'insertion d'un support de données, ainsi qu'un haut-parleur et un écran pour la lecture de messages audio et vidéo à partir du support de données, commandés par le circuit électronique sur la platine PCBA (Printed Circuit Board Assembled).
